(19) **Europäisches Patentamt / European Patent Office / Office européen des brevets**

(11) **EP 4 650 272 B1**

(12) **FASCICULE DE BREVET EUROPEEN**

(45) Date de publication et mention de la délivrance du brevet:
**08.07.2026 Bulletin 2026/28**

(21) Numéro de dépôt: **25159744.9**

(22) Date de dépôt: **24.02.2025**

(51) Classification Internationale des Brevets (IPC):
**B64C 27/46** *(2006.01)* **B64C 27/467** *(2006.01)*
**B64C 27/473** *(2006.01)* **B64C 11/18** *(2006.01)*

(52) Classification Coopérative des Brevets (CPC):
**B64C 27/463; B64C 27/467; B64C 27/473;**
B64C 11/18

(54) **PALE DE VOILURE TOURNANTE D'UN AÉRONEF, ET AÉRONEF MUNI D'UNE TELLE PALE**

DREHFLÜGELBLATT EINES FLUGZEUGS UND FLUGZEUG MIT EINEM SOLCHEN FLÜGEL

ROTARY WING BLADE OF AN AIRCRAFT, AND AIRCRAFT PROVIDED WITH SUCH A BLADE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **17.05.2024 FR 2405108**

(43) Date de publication de la demande:
**19.11.2025 Bulletin 2025/47**

(73) Titulaire: **Airbus Helicopters**
**13725 Marignane Cedex (FR)**

(72) Inventeurs:
- **DESVIGNE, Damien**
  **13725 MARIGNANE Cedex (FR)**
- **ROCA-LEON, Enric**
  **13725 MARIGNANE Cedex (FR)**
- **EGLIN, Paul**
  **13725 MARIGNANE Cedex (FR)**
- **KELAIDIS, Manousos**
  **13725 MARIGNANE Cedex (FR)**
- **COISNON, Rémi**
  **13725 MARIGNANE Cedex (FR)**
- **MICHEL, Bernard-René**
  **13725 MARIGNANE Cedex (FR)**
- **PINACHO, Jean-Paul**
  **13725 MARIGNANE Cedex (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(56) Documents cités:
**EP-A1- 0 565 413    EP-A1- 0 842 846**
**EP-A1- 0 901 961    FR-A1- 3 045 564**

Processed by Luminess, 75001 PARIS (FR)

**Description**

La présente invention concerne une pale de voilure tournante d'un aéronef, ainsi qu'un aéronef ayant une telle pale.

Un aéronef peut comprendre une voilure tournante munie d'au moins une pale. La pale est notamment mobile en rotation autour de l'axe de rotation de la voilure tournante et de son axe de pas. Par exemple, chaque pale est reliée à un système de pilotage du pas. Un tel système de pilotage du pas peut comprendre des actionneurs articulés à un plateau inférieur d'un ensemble de plateaux cycliques, un plateau supérieur de cet ensemble de plateaux cycliques étant relié à chaque pale par une bielle de pas respective. Le système de pilotage du pas peut en outre comprendre un compas supérieur liant le plateau supérieur à un mât rotor et un compas inférieur liant le plateau inférieur à un carter immobile. Chaque pale peut en outre être connectée à au moins un organe dénommé parfois « amortisseur de trainée » ou « adaptateur de fréquence ».

Une telle pale comprend selon son envergure un pied de pale destiné à être attaché à un moyeu, puis une partie courante aérodynamique. La partie courante assure l'essentiel de la portance de la pale

Selon un autre aspect, un aéronef à voilure tournante présente l'avantage de pouvoir évoluer aussi bien avec des vitesses d'avancement élevées qu'avec de très faibles vitesses d'avancement, voire nulles lors d'une phase de vol stationnaire.

Les caractéristiques géométriques d'une pale ont de fait un impact sur le fonctionnement de l'aéronef lors des vols d'avancement à des vitesses élevées et des vols à faibles vitesses.

En effet, plus la vitesse d'avancement augmente, plus les pales génèrent des efforts sur le système de pilotage du pas, voire sur les adaptateurs de fréquence ou les amortisseurs de trainée. Un constructeur peut chercher à minimiser ces efforts.

De plus, un constructeur cherche à obtenir des pales qui permettent d'atteindre des performances intéressantes à basses vitesses, et notamment qui permettent de décoller avec une charge utile maximisée.

Or, ces deux objectifs semblent antagonistes. La réduction des efforts introduits à hautes vitesses d'avancement dans le système de pilotage du pas, voire dans les adaptateurs de fréquence ou les amortisseurs de trainée, peut en effet s'obtenir en agissant sur les caractéristiques géométriques des pales, mais généralement au détriment des performances atteintes à basses vitesses, et inversement.

Les pales d'un hélicoptère usuel, dénommées « pales conventionnelles » par commodité par la suite, sont alors dimensionnées pour générer des efforts acceptables dans le système de pilotage du pas, voire dans les adaptateurs de fréquence ou les amortisseurs de trainée, tout en permettant d'atteindre des performances intéressantes à basses vitesses.

Néanmoins, certains aéronefs peuvent évoluer à des vitesses d'avancement en croisière stabilisée plus importantes, par exemple supérieures à 200 nœuds au lieu des 150 nœuds généralement constatés pour un hélicoptère usuel. A 200 nœuds et au-delà, une pale conventionnelle peut introduire des efforts dans le système de pilotage de pas (actionneurs, bielles de pas, plateaux cycliques, compas, ...), ainsi que dans les adaptateurs de fréquence ou les amortisseurs de trainée , susceptibles d'avoir un impact sur leurs durées de vie.

De manière classique, une pale peut être définie à l'aide de la forme des profils aérodynamiques des sections de la pale et du positionnement de ces sections les unes par rapport aux autres. Ainsi, le brevet FR 3045564 décrit une pale pour un rotor d'aéronef à voilure tournante, la pale s'étendant d'une part selon un axe de pale entre un début de pale apte à être relié à un moyeu du rotor et un bout de pale. La pale comporte une partie profilée située entre le début de pale et le bout de pale, la partie profilée étant constituée par une succession de profils aérodynamiques. Le bout de pale est situé à une distance de référence égale à un rayon rotor R de l'axe de rotation. La corde des profils, définie comme la distance entre le bord d'attaque et le bord de fuite desdits profils, de la partie profilée augmente entre le début de la partie profilée et une première section située à une première distance de l'axe de rotation A comprise entre 0.6*R et 0.9*R, la corde diminuant au-delà de la première section. Le vrillage géométrique des profils des sections de la pale décroît entre une deuxième section située à une deuxième distance de l'axe de rotation comprise entre 0.3*R et 0.4*R et le bout de pale, un premier gradient du vrillage étant compris entre -25° par rayon R et -4° par rayon R entre la deuxième section et une troisième section située à une troisième distance de l'axe de rotation A comprise entre 0.4*R et 0.6*R, un deuxième gradient du vrillage étant compris entre -25° par rayon et -4° par rayon entre la troisième section et une quatrième section située à une quatrième distance de l'axe de rotation A comprise entre 0.65*$R$ et 0.85*$R$, un troisième gradient du vrillage étant compris entre -16° par rayon $R$ et -4° par rayon $R$ entre la quatrième section et une cinquième section située à une cinquième distance de l'axe de rotation comprise entre 0.85*$R$ et 0.95*$R$, un quatrième gradient du vrillage étant compris entre -16° par rayon R et 0° par rayon R entre la cinquième section et le bout de pale.

Le vrillage d'une pale consiste à faire varier les angles des sections les unes par rapport aux autres. On entend par « angle de vrillage » d'une section l'angle géométrique formé entre la ligne de corde de cette section et une ligne parallèle à la ligne de corde d'une section de référence choisie de cette pale. Par commodité, on considère par la suite qu'un angle positif correspond à une inclinaison à cabrer de la section par rapport à la section de référence. On appelle « loi de vrillage » l'évolution des angles de vrillage selon l'envergure de la pale.

Le brevet FR 3045564 décrit une pale pour un rotor d'aéronef à voilure tournante comportant une partie profilée située entre le début de pale et le bout de pale. Le bout de pale est situé à une distance de référence égale à un rayon rotor R de l'axe de rotation A. La corde des profils de la partie profilée augmente entre le début de la partie profilée et une première section située à une première distance de l'axe de rotation comprise entre 0.6*R et 0.9*R, la corde diminuant au-delà de la première section. La pale présente une flèche avant entre le début de la partie profilée et une deuxième section située à une deuxième distance de l'axe de rotation A comprise entre 0.5*R et 0.8*R, le bord d'attaque formant un premier angle de flèche avant α1 compris entre 0° et 10° avec l'axe de pale. La pale présente une flèche dirigée vers l'avant entre la deuxième section et une troisième section S3 située à une troisième distance de l'axe de rotation comprise entre 0.6*R et 0.95*R, le bord d'attaque formant un deuxième angle de flèche avant α2 compris entre 1° et 15° avec l'axe de pale. En outre, la pale présente une flèche dirigée vers l'arrière de la pale entre la troisième section et le bout de pale, le bord d'attaque formant un troisième angle de flèche arrière α3 compris entre -35° et -15° avec l'axe de pale B.

Les documents EP 0565413 A1, EP 0842846 A1, et EP 0901961 A1 sont aussi connus.

La présente invention a pour but de proposer une pale limitant les efforts introduits sur un système de pilotage de pas, voire sur au moins un adaptateur de fréquence ou un amortisseur de trainée , à hautes vitesses tout en permettant de générer des portances conférant à un aéronef à voilure tournante des performances acceptables à basses vitesses, et notamment en vol stationnaire, et par exemple a des performances au moins sensiblement équivalentes aux performances atteintes sur un aéronef conventionnel.

La présente invention concerne une pale pour une voilure tournante d'un aéronef, la pale étant mobile en rotation autour d'un axe de rotation de la voilure tournante et autour d'un axe de pas, ladite pale s'étendant selon l'axe de pas d'une première extrémité à une deuxième extrémité, la pale comprenant un corps de pale ayant selon l'axe de pas un pied de pale puis une partie courante formés par une succession de sections sensiblement perpendiculaires à l'axe de pas, le corps de pale comprenant selon l'axe de pas un pied de pale puis une partie courante, le pied de pale étant muni d'une section d'origine formant la première extrémité, la partie courante s'étendant selon l'axe de pas d'une section initiale jusqu'à une section finale formant la deuxième extrémité, la section finale étant située à une distance égale à un rayon rotor R prédéterminé dudit axe de rotation, chaque section s'étendant selon un axe transversal d'un bord d'attaque à un bord de fuite séparés par une distance maximale constituant une corde, chaque section du corps de pale présentant un angle de vrillage géométrique par rapport à une section de référence située à une distance de l'axe de rotation égale à 70% du rayon rotor R.

La pale présente en outre les caractéristiques qui suivent :

- la section initiale est disposée à une distance de l'axe de rotation comprise entre 20% et 30% du rayon rotor R,

- selon une loi de variation en envergure de la corde des sections, la corde des sections augmente depuis la section d'origine jusqu'à une corde maximale atteinte dans une première section située à une première distance de l'axe de rotation comprise entre 75% et 80% du rayon rotor R puis décroît selon une loi présentant d'une part une décroissance lente jusqu'à une deuxième section et d'autre part une décroissance rapide, au-delà de la deuxième section, la deuxième section se situant à une deuxième distance de l'axe de rotation comprise entre 80% et 95% du rayon rotor R, une corde aérodynamique moyenne adimensionnée par le rayon rotor R étant comprise entre 0.05 et 0.08, la corde maximale adimensionnée par le rayon rotor R étant supérieure à la corde aérodynamique moyenne adimensionnée par le rayon rotor R et comprise entre 0.06 et 0.1,

- selon une loi de variation en envergure d'épaisseur relative, les sections ont une épaisseur relative qui décroît de la section d'origine à la section initiale d'une épaisseur relative comprise entre 0.25 et 0.70 jusqu'à une épaisseur relative comprise entre 0.12 et 0.15, la partie courante présentant à partir de la section initiale et jusqu'à une section intermédiaire une épaisseur relative constante ou une épaisseur relative qui décroît puis est constante, la partie courante ayant une épaisseur relative qui décroît en s'éloignant de la section intermédiaire jusqu'à une épaisseur relative comprise entre 0.07 et 0.08 dans la section finale, la section intermédiaire se trouvant à une distance de l'axe de rotation comprise entre 65% et 85% du rayon rotor R ;

- selon une loi de vrillage, les angles de vrillage géométrique croissent continument de la section d'origine jusqu'à la section initiale d'un angle minimal négatif jusqu'à un angle maximal positif puis décroissent selon un premier gradient compris entre -9° par rayon rotor R et -13° par rayon rotor R jusqu'à une troisième section se trouvant à une distance de l'axe de rotation comprise entre 70% et 80% du rayon rotor R, puis selon un deuxième gradient supérieur ou égal au premier gradient jusqu'à une quatrième section se trouvant à une distance de l'axe de rotation comprise entre 88% et 90% du rayon rotor R, à savoir un deuxième gradient générant une décroissance identique ou moins rapide que le premier gradient, puis selon un troisième gradient inférieur au premier gradient jusqu'à la section finale, à savoir un troisième gradient générant une décroissance plus rapide que le premier gradient,

**3**

- selon une loi de déport, une distance de déport séparant l'axe de pas d'une ligne quart de corde pour chaque section en partant du bord d'attaque décroît en partant de la section d'origine jusqu'à la section initiale, cette distance de déport étant constante dans la partie courante de la section initiale à une section de rupture puis décroît , la section de rupture se trouvant à une distance de l'axe de rotation comprise entre 80% et 95% du rayon rotor R ; la distance de déport pouvant décroître à partir de la section de rupture selon une loi décroissante d'ordre au moins 2 à savoir selon une fonction dont la dérivée et la dérivée seconde sont décroissantes également.

Une pale est usuellement dimensionnée par rapport au rayon rotor souhaité. Ce rayon rotor est en effet une caractéristique associée classiquement à une pale. La longueur du pied de pale peut varier, d'une voilure tournante à une autre, afin de toujours avoir la même partie courante et le même rayon rotor, quels que soient les dimensions des organes de la voilure tournante portant les pales.

Chaque section du pied de pale peut comporter un profil épais, à savoir présentant une épaisseur relative supérieure à 15% de sa corde, et chaque section de la partie courante peut comporter un profil aérodynamique mince, à savoir présentant une épaisseur relative inférieure ou égale à 15% de sa corde.

La corde aérodynamique moyenne est définie selon une pondération sur le carré du rayon :

$$\frac{c_{\text{aero}}}{R} = \frac{1}{R}\frac{\int_{r_0}^{1} c(r)r^2 dr}{\int_{r_0}^{1} r^2 dr}$$

avec c(r) la loi de variation en envergure de la corde des sections, $r_0$ la distance séparant la section d'origine de l'axe de rotation, R le rayon rotor et r la distance séparant une section de l'axe de rotation.

La partie courante comporte une partie intermédiaire prolongeant le pied de pale, puis un saumon. Le saumon débute, par exemple, à une distance de l'axe de rotation égale à 80% du rayon rotor R. Dès lors, la réduction des charges générées par la pale repose notamment sur les cordes, vrillages et déports obtenus dans la partie intermédiaire de la partie courante, alors que les performances en stationnaire s'obtiennent par la forme du saumon de la partie courante, siège des vitesses les plus élevées notamment en vol stationnaire.

En particulier, l'angle de vrillage est relativement affiné dans la partie intermédiaire, et laisse plus de liberté au saumon pour optimiser la performance de l'aéronef en vol stationnaire pénalisée par ce choix de vrillage dans la partie intermédiaire. La loi de corde permet en outre de maximiser la surface de la pale dans la zone utile en vol d'avancement, tout en réduisant la corde dans le cercle d'inversion qui est naturellement plus large à grande vitesse qu'avec des hélicoptères conventionnels.

La synergie des caractéristiques précitées permet d'obtenir une pale permettant d'une part de générer des efforts raisonnables sur un système de pilotage du pas, voire sur des adaptateurs de fréquence ou les amortisseurs de trainée, et d'autre part d'atteindre des performances acceptables à basses vitesses.

A titre illustratif, une telle pale permet d'obtenir des performances sensiblement équivalentes à une pale conventionnelle à basses vitesses. La figure de mérite en stationnaire obtenue avec une telle pale est proche de la figure de mérite d'une pale conventionnelle pour une poussée rotor correspondant au domaine opérationnel de vol. En outre, les efforts générés par une telle pale à très grandes vitesses, par exemple à 220 nœuds, sont de l'ordre des efforts générés par une pale conventionnelle à grande vitesse, à savoir par exemple à 150 nœuds.

La pale selon l'invention peut de plus comporter une ou plusieurs des caractéristiques qui suivent.

Ainsi, le pied de pale peut comporter des profils établis selon l'enseignement du document EP 3501979 A1.

Selon une possibilité compatible avec les précédentes, la partie courante peut comporter un premier profil de la section initiale jusqu'à une section interne se trouvant à une distance de l'axe de rotation comprise entre 30 et 35% du rayon rotor R, un deuxième profil de la section interne à la section intermédiaire, qui se trouve par exemple à une distance de l'axe de rotation égale à 70% du rayon rotor R, le deuxième profil de la section intermédiaire à une section de transition, qui se trouve par exemple à une distance de l'axe de rotation égale à 90% du rayon rotor R, un troisième profil de la section de transition à la section finale, et un quatrième profil dans la section finale.

Le premier profil, le deuxième profil, le troisième profil et le quatrième profil sont différents, voire peuvent être des profils « OA » connus de l'homme du métier. Par exemple, le premier profil peut prendre la forme du profil OA415, le deuxième profil peut prendre la forme du profil OA312, le troisième profil peut prendre la forme du profil OA309, et le quatrième profil peut prendre la forme du profil OA407.

Selon une possibilité compatible avec les précédentes, quelle que soit la réalisation, la pale peut comporter toutes les caractéristiques suivantes :

- la corde des sections augmente depuis la section d'origine jusqu'à une corde maximale atteinte selon un taux d'accroissement moyen de 4.47%,

- la section initiale a une épaisseur relative de 0.45, la partie courante présentant à partir de la section initiale une épaisseur relative qui décroît linéairement d'une valeur de 0.15 jusqu'à 0.12 au niveau d'une section interne puis est constante jusqu'à la section intermédiaire, la section intermédiaire se trouvant à une distance de l'axe de rotation égale à 70% du rayon rotor R,

- les angles de vrillage croissent selon une loi convexe au niveau du pied de pale, le premier gradient est égal à -10° par rayon rotor R,

- la ligne de quart de corde est située sur l'axe de pas au niveau de la section d'origine, la distance de déport adimensionnée par le rayon rotor R étant égale à +0.041% du rayon rotor dans un tronçon allant de la section initiale à la section de rupture, la ligne de quart de corde de ce tronçon se trouvant entre l'axe de pas et le bord d'attaque des sections de ce tronçon.

La synergie des caractéristiques précitées permet d'obtenir une pale permettant de générer à hautes vitesses des efforts raisonnables sur un système de pilotage du pas, voire sur des adaptateurs de fréquence ou les amortisseurs de trainée.

En complément, la pale peut comporter les caractéristiques suivantes :

- la section initiale est disposée à une distance de l'axe de rotation égale à 24% du rayon rotor R,

- la corde aérodynamique moyenne adimensionnée par le rayon rotor R est égale à 0.0651.

Les variants qui suivent présentent notamment des saumons différents.

Selon un premier variant :

- la corde maximale adimensionnée par le rayon rotor R est égale à 0.0746, la première distance étant égale à 78.2% du rayon rotor R,

- la deuxième distance est égale à 87% du rayon rotor R, la décroissance de la corde des sections de la partie courante passant de -2.85% à -18.16% au niveau de la deuxième section, la corde décroissant à partir de la deuxième section selon une courbe présentant un point d'inflexion dans une section d'inflexion située à une troisième distance de l'axe de rotation égale à 94.5% du rayon rotor R, la pente de la courbe au niveau du point d'inflexion étant selon un axe horizontal,

- la partie courante a une épaisseur relative qui décroît linéairement en s'éloignant de la section intermédiaire jusqu'à une épaisseur relative égale à 0.07 dans la section finale,

- le deuxième gradient est égal à -7.3° par rayon rotor R, le troisième gradient est égal à -20° par rayon rotor R, la quatrième section se trouvant à une distance de l'axe de rotation égale à 88% du rayon rotor R,

- la section de rupture se trouvant à une distance de l'axe de rotation égale à 85% du rayon rotor R, la distance de déport adimensionnée par le rayon rotor R étant égale à 0.051 dans la section finale avec un point de quart de corde situé entre l'axe de pas et le bord de fuite, la distance de déport adimensionnée par le rayon rotor R variant selon une loi en tangente hyperbolique de la section de rupture à la section finale.

Par exemple, ladite loi en tangente hyperbolique est définie par l'équation :

$$\frac{\text{YAC}\left(\frac{r}{R}\right)}{R} = \frac{\text{YAC}_{\text{tip}}}{R} + \frac{\text{YAC}_0 - \text{YAC}_{\text{tip}}}{R \tanh\left[k\left(1 - \frac{r_D}{R}\right)\right]} \tanh\left[k\left(1 - \frac{r}{R}\right)\right]$$

avec « YAC » la distance de déport, « R » le rayon rotor, « r » le rayon séparant la section concernée de l'axe de rotation, « $\text{YAC}_{\text{tip}}$ » égal à -0.051 multiplié par le rayon rotor R, « $\text{YAC}_0$ » égal à 0.041 multiplié par le rayon rotor R, « $r_D/R$ » égal à 0.85, « k » égal à 23.1.

En stationnaire, ce premier variant peut permettre d'obtenir une figure de mérite sensiblement équivalente voire meilleure par rapport à une pale conventionnelle à corde constante pour une poussée rotor correspondant au domaine opérationnel de vol. En outre, la baisse de la figure de mérite peut se produire pour des poussées supérieures par rapport à cette pale conventionnelle et par rapport au besoin opérationnel. Cette baisse tardive de la figure de mérite offre la possibilité d'élargir le besoin opérationnel, par exemple dans le cadre d'une revalorisation de l'aéronef équipé de cette pale. Par exemple, cette baisse tardive de la figure de mérite peut permettre d'augmenter la masse de l'aéronef.

Selon un deuxième variant :

- la corde maximale adimensionnée par le rayon rotor R est égale à 0.0746, la première distance étant égale à 78.2% du rayon rotor R,

- la deuxième distance est égale à 87% du rayon rotor R, la décroissance passant de -2.85% à -18.16% au niveau de la deuxième section, la corde décroissant à partir de la deuxième section selon une courbe présentant un point d'inflexion dans une section d'inflexion située à une troisième distance de l'axe de rotation égale à 94.5% du rayon rotor R, la pente de la courbe au niveau du point d'inflexion étant selon un axe oblique,

- la partie courante ayant une épaisseur relative qui décroît linéairement en s'éloignant de la section intermédiaire jusqu'à une épaisseur égale à 0.08 d'une section se trouvant à une distance de l'axe de rotation égale à 90% du rayon rotor R jusqu'à la section finale incluse,

- le deuxième gradient est égal à -7.3° par rayon rotor R, le troisième gradient est égal à -20° par rayon rotor R, la quatrième section se trouvant à une distance de l'axe de rotation égale à 88% du rayon rotor R,

- la section de rupture se trouvant à une distance de l'axe de rotation égale à 91.5% du rayon rotor R, la distance de déport adimensionnée par le rayon rotor R étant égale à 0.03384 dans la section finale avec un point de quart de corde situé entre l'axe de pas et le bord de fuite, la distance de déport adimensionnée par le rayon rotor R variant selon une loi en tangente hyperbolique de la section de rupture à la section finale.

Eventuellement, ladite loi en tangente hyperbolique est définie par l'équation:

$$\frac{\text{YAC}\left(\frac{r}{R}\right)}{R} = \frac{\text{YAC}_{\text{tip}}}{R} + \frac{\text{YAC}_0 - \text{YAC}_{\text{tip}}}{R \tanh\left[k\left(1 - \frac{r_D}{R}\right)\right]} \tanh\left[k\left(1 - \frac{r}{R}\right)\right]$$

avec « YAC » la distance de déport, « R » le rayon rotor, « r » le rayon séparant la section concernée de l'axe de rotation, « YAC$_{\text{tip}}$» égal à -0.03384 multiplié par le rayon rotor R, « YAC$_0$ » égal à 0.041 multiplié par le rayon rotor R, « r$_D$/R » égal à 0.85, « k » égal à 31.

En stationnaire, ce deuxième variant permet d'obtenir une figure de mérite sensiblement identique à celle du premier variant, mais avec une baisse de la figure de mérite plus précoce.

Selon un troisième variant :

- la corde maximale adimensionnée par le rayon rotor est égale à 0.0746, la première distance étant égale à 78.2% du rayon rotor R,
- la deuxième distance est égale à 94.5% du rayon rotor R,
- la partie courante ayant une épaisseur relative qui décroît linéairement en s'éloignant de la section intermédiaire jusqu'à une épaisseur relative égale à 0.07 dans la section finale,
- le deuxième gradient est égal à -10° par rayon rotor R, le troisième gradient est égal à -20° par rayon rotor R, la quatrième section se trouvant à une distance de l'axe de rotation égale à 88% du rayon rotor R,
- la section de rupture se trouvant à une distance de l'axe de rotation égale à 85% du rayon rotor R, la distance de déport adimensionnée par le rayon rotor R étant égale à 0.051 dans la section finale avec un point de quart de corde situé entre l'axe de pas et le bord de fuite, la distance de déport adimensionnée par le rayon rotor R variant selon une loi prédéterminée de la section de rupture à la section finale.

Eventuellement, ladite loi prédéterminée est définie par l'équation :

$$\frac{\mathrm{YAC}\left(\frac{r}{R}\right)}{R} = \frac{\mathrm{YAC_{tip}}}{R} + \frac{\mathrm{YAC_0} - \frac{d}{R}\exp\left[\left(\frac{r_D - u}{sig}\right)^2\right] - \mathrm{YAC_{tip}}}{R\tanh\left[k\left(1 - \frac{r_D}{R}\right)\right]}\tanh\left[k\left(1 - \frac{r}{R}\right)\right]$$

$$+ \frac{d}{R}\exp\left[\left(\frac{r - u}{sig}\right)^2\right]$$

avec « YAC » la distance de déport, « R » le rayon rotor, « r » le rayon séparant la section concernée de l'axe de rotation, « $\mathrm{YAC_{tip}}$ » égal à -0.051 multiplié par le rayon rotor R, « $\mathrm{YAC_0}$ » égal à 0.041 multiplié par le rayon rotor R, « $r_D/R$ » égal à 0.85, « k » égal à 23.1, « d » égal à -0.29% du rayon rotor R, « u » égal à 92.8% du rayon rotor R et « sig » égal à 3.7% du rayon rotor R.

En stationnaire, ce troisième variant présente une figure de mérite réduite par rapport à celles des premier et deuxième variants pour une poussée rotor correspondant au domaine opérationnel de vol, mais cette figure de mérite se maintient pour des poussées supérieures au besoin opérationnel ce qui peut offrir la possibilité d'élargir ce besoin opérationnel par exemple dans le cadre d'une revalorisation de l'aéronef équipé de cette pale.

Selon un quatrième variant :

- la corde maximale adimensionnée par le rayon rotor R est égale à 0.0746, la première distance étant égale à 78.2% du rayon rotor R,

- la deuxième distance est égale à 94.5% du rayon rotor R,

- la partie courante ayant une épaisseur relative qui décroît linéairement en s'éloignant de la section intermédiaire jusqu'à une épaisseur relative égale à 0.07 dans la section finale,

- le deuxième gradient est égal à -10° par rayon rotor R, le troisième gradient est égal à -20° par rayon rotor R, la quatrième section se trouvant à une distance de l'axe de rotation égale à 88% du rayon rotor R,

- la section de rupture se trouvant à une distance de l'axe de rotation égale à 94% du rayon rotor R, la distance de déport adimensionnée par le rayon rotor R étant égale à 0.03384 dans la section finale avec un point de quart de corde situé entre l'axe de pas et le bord de fuite, la distance de déport adimensionnée par le rayon rotor R variant selon une loi prédéterminée de la section de rupture à la section finale.

Eventuellement, ladite loi prédéterminée est définie par l'équation :

$$\frac{\mathrm{YAC}\left(\frac{r}{R}\right)}{R} = \frac{\mathrm{YAC_{tip}}}{R} + \frac{\mathrm{YAC_0} - \frac{d}{R}\exp\left[\left(\frac{r_D - u}{sig}\right)^2\right] - \mathrm{YAC_{tip}}}{R\tanh\left[k\left(1 - \frac{r_D}{R}\right)\right]}\tanh\left[k\left(1 - \frac{r}{R}\right)\right]$$

$$+ \frac{d}{R}\exp\left[\left(\frac{r - u}{sig}\right)^2\right]$$

avec « YAC » la distance de déport, « R » le rayon rotor, « r » le rayon séparant la section concernée de l'axe de rotation, « $\mathrm{YAC_{tip}}$ » égal à -0.03384 multiplié par le rayon rotor R, « $\mathrm{YAC_0}$ » égal à 0.041 multiplié par le rayon rotor R, « $r_D/R$ » égal à 0.85, « k » égal à 32, « d » égal à 0.15% du rayon rotor R, « u » égal à 95.5 du rayon rotor R et « sig » égal à 1.3% du rayon rotor R.

Le quatrième variant a des performances similaires à celles du troisième variant.

Quelle que soit la réalisation, la partie courante peut comporter en partant du pied de pale une partie intermédiaire suivie d'un saumon, le saumon présentant un dièdre nul par rapport à la partie intermédiaire.

Un angle de dièdre est alternativement envisageable. La pale avec dièdre peut permettre d'atteindre des performances plus intéressantes en vol stationnaire.

L'invention vise aussi une voilure tournante munie d'un moyeu mobile en rotation autour d'un axe de rotation, la voilure tournante comprenant au moins une pale selon l'invention attachée au moyeu.

Un aéronef peut être muni d'une telle voilure tournante. L'aéronef peut comprendre un système de pilotage du pas pour piloter le pas de chaque pale de la voilure tournante.

L'invention et ses avantages apparaîtront avec plus de détails dans le cadre de la description qui suit avec des exemples donnés à titre illustratif en référence aux figures annexées qui représentent :

la figure 1, un schéma partiel d'une pale selon l'invention agencée sur une voilure tournante d'un aéronef,

la figure 2, une vue d'un exemple de pale selon l'invention ,

la figure 3, une vue explicitant les profils d'une pale selon l'invention,

la figure 4, un diagramme présentant l'évolution de la corde des sections de la pale de la figure 2 adimensionnée par le rayon rotor,

la figure 5, un diagramme présentant l'évolution de l'épaisseur relative des sections de la pale de la figure 2,

la figure 6, un diagramme présentant l'évolution de l'angle de vrillage des sections de la pale de la figure 2,

la figure 7, un diagramme illustrant l'évolution du déport des sections de la pale de la figure 2 ,

la figure 8, une vue d'un exemple de pale selon l'invention,

la figure 9, un diagramme présentant l'évolution de la corde des sections de la pale de la figure 8 adimensionnée par le rayon rotor,

la figure 10, un diagramme présentant l'évolution de l'épaisseur relative des sections de la pale de la figure 8,

la figure 11, un diagramme illustrant l'évolution du déport des sections de la pale de la figure 8,

la figure 12, une vue d'un exemple de pale selon l'invention,

la figure 13, un diagramme présentant l'évolution de la corde des sections de la pale de la figure 13 adimensionnée par le rayon rotor,

la figure 14, un diagramme présentant l'évolution de l'angle de vrillage des sections de la pale de la figure 13,

la figure 15, un diagramme illustrant l'évolution du déport des sections de la pale de la figure 13,

la figure 16, une vue d'un exemple de pale selon l'invention, et

la figure 17, un diagramme illustrant l'évolution du déport des sections de la pale de la figure 16.

Les éléments présents dans plusieurs figures distinctes sont affectés d'une seule et même référence.

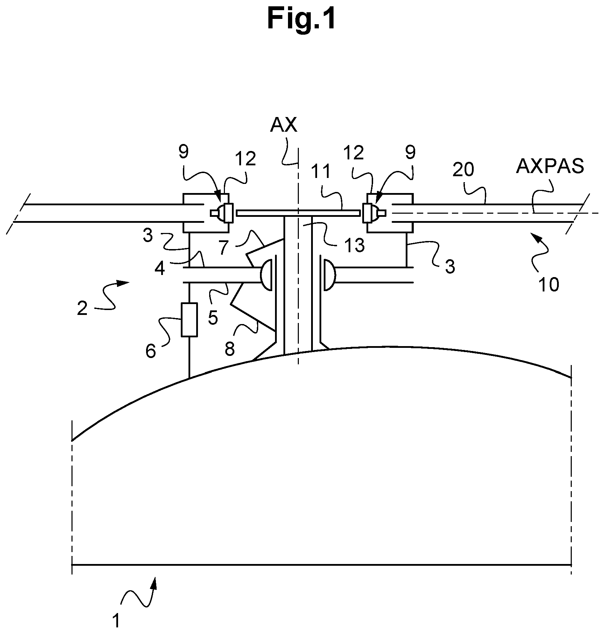

La figure 1 présente schématiquement une pale 20 selon l'invention. Chaque pale 20 est une partie constitutive d'une voilure tournante 10 d'un aéronef 1.

Chaque pale 20 peut être portée par un moyeu 11, par exemple via un manchon 12. Selon l'illustration donnée, la pale 20 est fixée à un manchon 12 articulé par une butée lamifiée 9 au moyeu 11. Le moyeu 11 est solidaire en rotation d'un mât rotor 13 qui met en rotation le moyeu 11 et les pales 20 autour d'un axe de rotation AX.

En outre, chaque pale 20 est aussi mobile en rotation notamment autour d'un axe de pas AXPAS qui lui est propre, voire autour voire d'un axe de traînée. L'axe de pas AXPAS s'étend sensiblement dans un plan vertical radial par rapport à l'axe de rotation AX. Pour piloter le pas de pales, l'aéronef 1 comporte un système de pilotage du pas 2.

Ce système de pilotage du pas 2 comporte, par exemple, plusieurs actionneurs 6 articulés à un plateau inférieur 5 d'un ensemble de plateaux cycliques usuel. Chaque pale 20 est alors articulée à une bielle de pas 3, les bielles de pas 3 étant aussi chacune articulées au plateau supérieur 4 de l'ensemble de plateaux cycliques. Un compas supérieur 7 peut être articulé au mât rotor 13 et au plateau supérieur 4, un compas inférieur 8 étant articulé au plateau inférieur 5 et à un support immobile de l'aéronef 1.

L'aéronef 1 peut aussi comprendre des adaptateurs de fréquence ou des amortisseurs de trainée . Chaque adaptateur de fréquence ou amortisseur de trainée est articulé à une pale 20 et à une pale adjacente ou au moyeu 11.

Une pale 20 selon l'invention permet de limiter les efforts exercés sur le système de pilotage du pas 2 et sur les adaptateurs de fréquence ou les amortisseurs de trainée à très hautes vitesses d'avancement de l'aéronef 1, tout en conférant à l'aéronef des performances usuelles à basses vitesses.

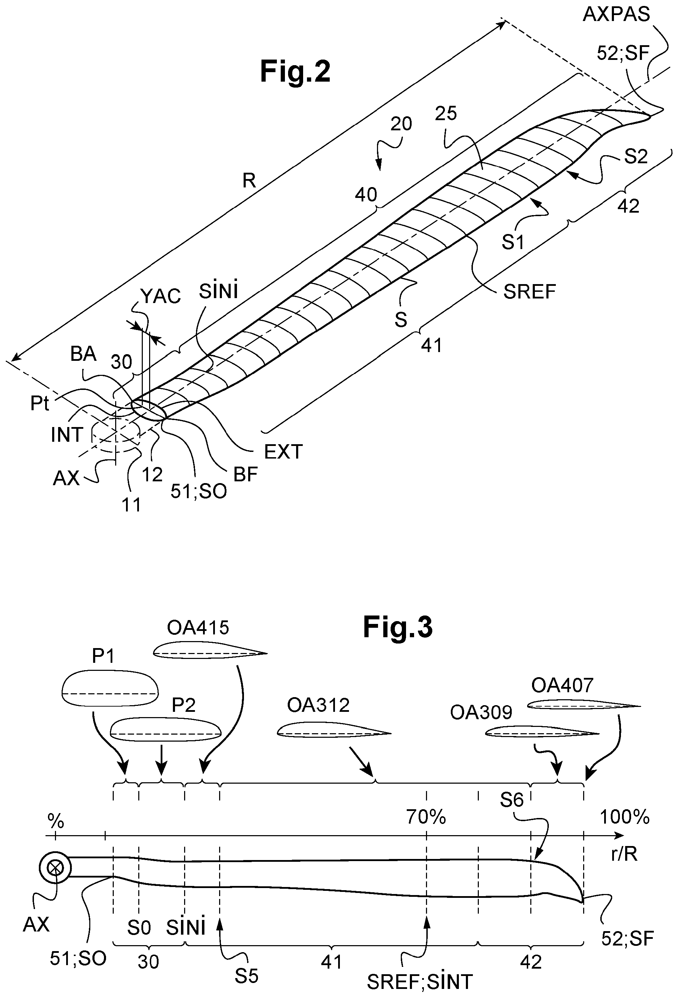

Les figures 2 à 17 illustrent divers exemples de pales 20 selon l'invention.

Quelle que soit la réalisation et en référence à la figure 2 par exemple, une pale 20 s'étend selon l'axe de pas AXPAS, et en s'éloignant de l'axe de rotation AX, d'une première extrémité 51 à une deuxième extrémité 52. La distance séparant la deuxième extrémité 52 de l'axe de rotation AX est dénommée rayon rotor R.

En particulier, la pale 20 comprend un corps de pale 25 qui présente successivement, selon l'axe de pas AXPAS et en s'éloignant de l'axe de rotation AX, un pied de pale 30 puis une partie courante 40. Le pied de pale 30 comporte la première extrémité 51 et peut être fixé au manchon 11 selon l'exemple donné. A l'inverse, la partie courante 40 comporte la deuxième extrémité 52. La partie courante 40 peut être décomposée en une partie intermédiaire 41 prolongée par un saumon 42, la partie intermédiaire 41 s'étendant à partir du pied de pale 30 jusqu'à une distance de l'axe de rotation AX égale à 80% du rayon rotor R. Le saumon 42 peut présenter un dièdre nul par rapport à la partie intermédiaire 41.

Le corps de pale 25 est constitué d'une succession de sections S sensiblement perpendiculaires à l'axe de pas AXPAS. La référence S désigne n'importe quelle section, les références SO, SF, SREF, SINI, SINT, S1, S2, S3, S4, S5, S6, SINF, SRUPT désignant si besoin des sections particulières.

Ainsi, le pied de pale 30 s'étend d'une section d'origine SO formant la première extrémité 51 jusqu'à la première section de la partie courante 40 dénommée section initiale SINI. La section initiale SINI peut être disposée à une distance de l'axe de rotation AX comprise entre 20% et 30% du rayon rotor R, et favorablement égale à 24% du rayon rotor R selon les exemples donnés. Le rayon rotor R peut être une caractéristique prédéterminée d'une pale selon l'invention, seul le pied de pale ayant une longueur qui varie d'un rotor à un autre.

La partie courante 40 s'étend de cette section initiale SINI jusqu'à une section finale SF formant la deuxième extrémité 52. La partie courante 40 comporte en outre une section de référence SREF située à une distance de l'axe de rotation AX égale à 70% du rayon rotor R.

Chaque section S présente un profil aérodynamique et s'étend selon un axe transversal d'un bord d'attaque BA à un bord de fuite BF séparés par une distance constituant une corde C. Chaque section S présente aussi :

- une épaisseur relative égale au quotient de son épaisseur maximale T et de sa corde C,

- un angle de vrillage géométrique par rapport à la section de référence SREF,

- une distance de déport YAC entre l'axe de pas AXPAS et la ligne de quart de corde.

Par ailleurs, chaque section S du pied de pale 30 peut comporter un profil aérodynamique épais et chaque section S de la partie courante 40 peut comporter un profil aérodynamique mince. Un tel profil aérodynamique mince comporte une épaisseur relative inférieure ou égale à 0.15.

La figure 3 illustre des exemples de profils aérodynamiques.

Le pied de pale 30 peut comporter des profils arrondis. Par exemple, le pied de pale 30 comporte un premier profil P1 de la section d'origine SO jusqu'à une section SO1, puis un deuxième profil P2 ayant une épaisseur relative plus faible jusqu'à la section initiale SINI non incluse. Le pied de pale peut par exemple comporter des profils établis selon l'enseignement du document EP 3501979 A1.

La partie courante 40 peut comporter un premier profil, par exemple de type OA415, de la section initiale SINI incluse jusqu'à une section interne S5 non incluse se trouvant éventuellement à une distance de l'axe de rotation AX comprise entre 30 et 35% inclus du rayon rotor R. La partie courante 40 peut ensuite comporter un deuxième profil, par exemple de type OA312, de la section interne S5 incluse à la section intermédiaire SINT non incluse, cette section intermédiaire SINT pouvant se trouver à une distance de l'axe de rotation AX égale par exemple à 70% du rayon rotor R. La partie courante 40 peut ensuite comporter le deuxième profil de la section intermédiaire SINT incluse à une section de transition S6 non incluse qui peut se trouver à une distance de l'axe de rotation AX égale à 90% du rayon rotor R, puis un troisième profil, par exemple de type OA309, de la section de transition S6 incluse à la section finale SF non incluse, et un quatrième profil par exemple de type OA407 dans la section finale SF.

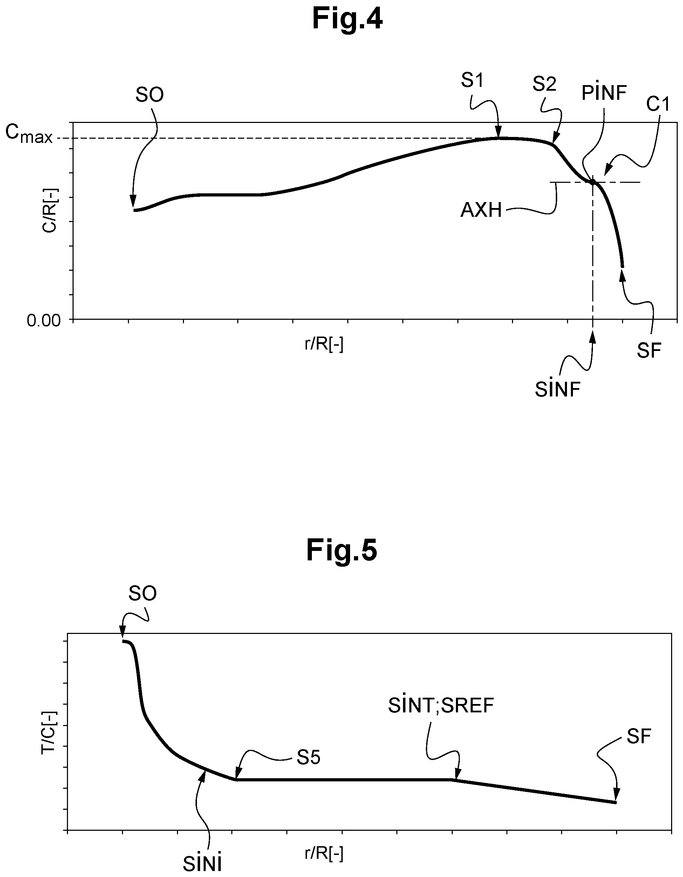

Par ailleurs, la figure 4 présente un diagramme présentant en ordonnée la corde C des sections S adimensionnée par le rayon rotor R et en abscisse la distance r séparant chaque section de l'axe de rotation AX adimensionnée par le rayon rotor R. Ce diagramme présente ainsi la loi d'évolution de la corde de la pale 20.

Quelle que soit la réalisation, la corde C des sections S augmente depuis la section d'origine SO jusqu'à une corde maximale Cmax. Cette corde Cmax est atteinte dans une première section S1 située à une première distance de l'axe de rotation AX comprise entre 75% et 80% inclus du rayon rotor R. Ensuite, la corde C décroît selon une courbe présentant d'une part une décroissance lente jusqu'à une deuxième section S2 puis d'autre part une décroissance rapide. Les expressions « décroissance lente » et « décroissance rapide » signifient que la moyenne arithmétique des gradients entre deux sections S adjacentes entre la première section S1 et la deuxième section S2 est inférieure à la moyenne arithmétique des gradients entre deux sections S adjacentes entre la deuxième section S2 et la section finale SF.

La deuxième section S2 est positionnée à une deuxième distance de l'axe de rotation AX comprise entre 80% et 95% inclus du rayon rotor R.

Il est à noter que la corde aérodynamique moyenne Caero adimensionnée par le rayon rotor R est comprise entre 0.05 et 0.08 inclus. De plus, la corde maximale Cmax adimensionnée par le rayon rotor R est supérieure à cette corde aérodynamique moyenne Caero adimensionnée par le rayon rotor R, en étant comprise entre 0.06 et 0.1 inclus.

En particulier, les exemples illustrés présentent tous une corde aérodynamique moyenne Caero adimensionnée par le rayon rotor R égale à 0.0651. Selon un autre aspect, la corde des sections S peut augmenter depuis la corde correspondant à la section d'origine SO jusqu'à la corde maximale Cmax selon un taux d'accroissement moyen de 4.47%.

La réalisation de la figure 2 présente de son côté une corde maximale Cmax adimensionnée par le rayon rotor R égale à 0.0746, la première distance étant égale à 78.2% du rayon rotor R. De plus, la deuxième distance est égale à 87% du rayon rotor R. En outre, la décroissance de la corde des sections S de la partie courante 40 passe de -2.85% à -18.16% au niveau de la deuxième section S2. Ensuite, la loi d'évolution de la corde présente un point d'inflexion PINF dans une section d'inflexion SINF située à une troisième distance de l'axe de rotation AX égale à 94.5% du rayon rotor R, la pente de la courbe au niveau du point d'inflexion étant selon axe horizontal AXH.

Par ailleurs, la figure 5 présente un diagramme présentant en ordonnée l'épaisseur relative T/C des sections S et en abscisse la distance r séparant chaque section S de l'axe de rotation AX adimensionnée par le rayon rotor R. Ce diagramme présente ainsi la loi d'évolution de l'épaisseur relative des sections de la pale 20.

Quelle que soit la réalisation, les sections S ont une épaisseur relative T/C qui décroît de la section d'origine S0 à la section initiale SINI d'une épaisseur relative T/C comprise entre 0.25 et 0.70 inclus jusqu'à une épaisseur relative T/C comprise entre 0.12 et 0.15 inclus. La partie courante 40 présente à partir de la section initiale SINI et jusqu'à une section intermédiaire SINT une épaisseur relative T/C constante ou une épaisseur relative T/C qui décroît puis est constante selon les exemples donnés. De plus, la partie courante 40 a une épaisseur relative T/C qui décroît en s'éloignant de la section intermédiaire SINT jusqu'à une épaisseur relative T/C comprise entre 0.07 et 0.08 inclus dans la section finale, la section intermédiaire SINT se trouvant à une distance de l'axe de rotation AX comprise entre 65% et 85% inclus du rayon rotor R.

En particulier, les exemples illustrés présentent tous une section initiale SINI ayant une épaisseur relative T/C de 0.45. La partie courante 40 de ces exemples présente, à partir de la section initiale SINI, une épaisseur relative T/C qui décroît linéairement d'une valeur de 0.15 jusqu'à une valeur de 0.12 atteinte au niveau d'une section interne S5, comprise entre 30 et 35% inclus du rayon rotor R, puis une épaisseur relative T/C constante jusqu'à la section intermédiaire SINT. La section intermédiaire SINT se trouve à une distance de l'axe de rotation AX égale à 70% du rayon rotor R.

La réalisation de la figure 2 présente de son côté une partie courante 40 munie d'une épaisseur relative T/C qui décroît linéairement en s'éloignant de la section intermédiaire SINT jusqu'à une épaisseur relative égale à 0.07 dans la section finale SF.

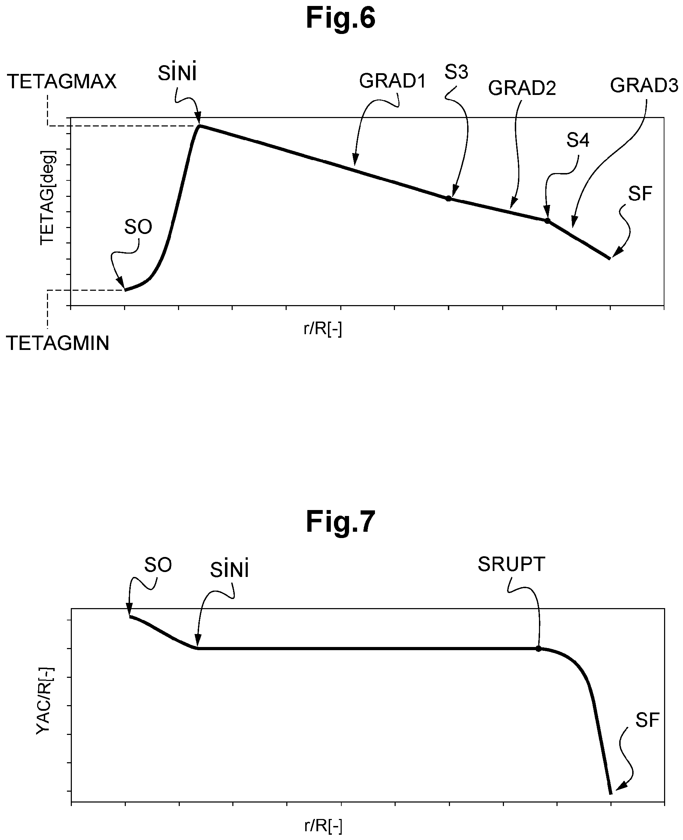

Par ailleurs, la figure 6 présente un diagramme présentant en ordonnée l'angle TETAG de vrillage géométrique des sections S et en abscisse la distance r séparant chaque section S de l'axe de rotation AX adimensionnée par le rayon rotor R. Ce diagramme présente ainsi la loi d'évolution du vrillage de la pale 20.

Quelle que soit la réalisation, les angles de vrillage géométrique des sections S croissent continument de la section d'origine SO jusqu'à la section initiale SINI d'un angle minimal TETAGMIN négatif jusqu'à un angle maximal TETAGMAX positif. Ensuite, les angles de vrillage géométrique des sections décroissent selon un premier gradient GRAD1 compris entre -9° par rayon rotor R et -13° par rayon rotor R inclus jusqu'à une troisième section S3 se trouvant à une distance de l'axe de rotation AX comprise entre 70% et 80% inclus du rayon rotor R, puis selon un deuxième gradient GRAD2 supérieur ou égal au premier gradient GRAD1 jusqu'à une quatrième section S4 se trouvant à une distance de l'axe de rotation AX comprise entre 88% et 90% inclus du rayon rotor R, puis selon un troisième gradient GRAD3 inférieur au premier gradient GRAD1 jusqu'à la section finale SF.

En particulier, les exemples illustrés présentent tous des angles de vrillage qui croissent selon une loi convexe au niveau du pied de pale 30, et un premier gradient GRAD1 égal à -10° par rayon rotor R.

La réalisation de la figure 2 présente de son côté un deuxième gradient GRAD2 égal à -7.3° par rayon rotor R, un troisième gradient GRAD3 égal à -20° par rayon rotor R, une quatrième section S4 se trouvant à une distance de l'axe de rotation AX égale à 88% du rayon rotor R.

Par ailleurs, la figure 7 présente un diagramme présentant en ordonnée la distance de déport des sections S adimensionnée par le rayon rotor R et en abscisse la distance r séparant chaque section S de l'axe de rotation AX adimensionnée par le rayon rotor R. Ce diagramme présente ainsi la loi d'évolution du déport des sections S de la pale 20.

Quelle que soit la réalisation, dans chaque section S, une distance de déport sépare l'axe de pas AXPAS d'un point Pt situé au quart de la corde C de cette section S en partant du bord d'attaque BA. Les points Pt des sections S forment une ligne dénommée ligne de quart de corde par l'homme du métier.

Cette distance de déport décroît en partant de la section d'origine SO jusqu'à la section initiale SINI, puis est constante dans la partie courante 40 de la section initiale SINI à une section de rupture SRUPT, et enfin décroît jusqu'à la section finale. La section de rupture SRUPT se trouve à une distance de l'axe de rotation AX comprise entre 80% et 95% inclus du rayon rotor R.

En particulier, les exemples illustrés présentent tous une distance de déport au niveau de la section d'origine SO qui est égale au quart de la corde de cette section d'origine SO. Autrement dit, l'axe de pas et la ligne de quart de corde sont confondus dans la section d'origine SO.

De plus, la distance de déport adimensionnée par le rayon rotor R est égale à +0.041% du rayon rotor R dans un tronçon allant de la section initiale SINI à la section de rupture SRUPT, la ligne de quart de corde de ce tronçon se trouvant entre l'axe de pas AXPAS et le bord d'attaque BA de ce tronçon.

La réalisation de la figure 7 présente de son côté une section de rupture SRUPT positionnée à une distance de l'axe de rotation AX égale à 85% du rayon rotor R. La distance de déport adimensionnée par le rayon rotor R est en outre égale à 0.051 dans la section finale SF avec un point de quart de corde situé entre l'axe de pas AXPAS et le bord de fuite BF. La distance de déport adimensionnée par le rayon rotor R varie selon une loi en tangente hyperbolique de la section de rupture SRUPT à la section finale SF. Cette loi en tangente hyperbolique peut prendre la forme suivante :

$$\frac{\text{YAC}\left(\frac{r}{R}\right)}{R} = \frac{\text{YAC}_{\text{tip}}}{R} + \frac{\text{YAC}_0 - \text{YAC}_{\text{tip}}}{R \tanh\left[k\left(1 - \frac{r_D}{R}\right)\right]} \tanh\left[k\left(1 - \frac{r}{R}\right)\right]$$

avec « YAC » la distance de déport, « R » le rayon rotor, « r » le rayon séparant la section concernée de l'axe de rotation, « YAC$_{\text{tip}}$ » égal à -0.051 multiplié par le rayon rotor R, « YAC$_0$ » égal à 0.041 multiplié par le rayon rotor R, « r$_D$/R » égal à 0.85, « k » égal à 23.1.

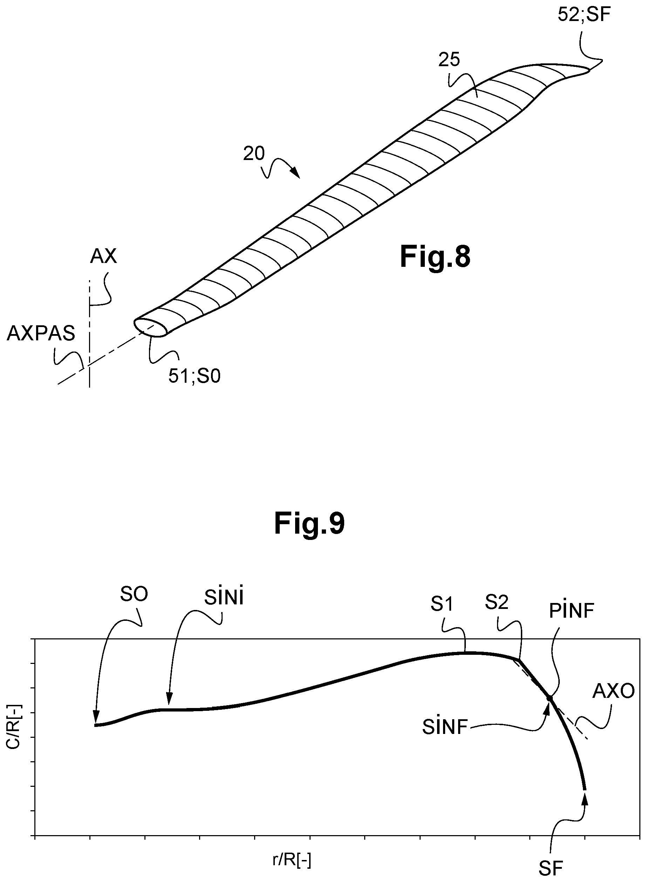

Les réalisations des figures 8 à 17 présentent des saumons 42 qui diffèrent de la réalisation des figures 2 à 7.

Les figures 8 à 11 illustrent une première variante V1 qui se distingue de la réalisation de la figure 2 par ses lois de variation de la corde C, de l'épaisseur relative et de déport au niveau du saumon 42. La loi de vrillage est identique à la loi de la réalisation des figures 2 à 7 décrites précédemment.

Comme pour la réalisation de la figure 2 et en référence à la figure 9, pour cette première variante V1, la corde maximale Cmax adimensionnée par le rayon rotor R est égale à 0.0746, la première distance étant égale à 78.2% du rayon rotor R. En outre, la deuxième distance séparant la deuxième section S2 de l'axe de rotation AX est égale à 87% du rayon rotor R. Il est à noter que la décroissance passe de -2.85% à -18.16% au niveau de la deuxième section S2. La corde C décroît à partir de la deuxième section S2 selon une courbe présentant un point d'inflexion PINF dans une section d'inflexion SINF située à une troisième distance de l'axe de rotation AX égale à 94.5% du rayon rotor R, mais la pente de la courbe au niveau du point d'inflexion est selon un axe oblique AXO au lieu d'un axe horizontal pour la pale de la figure 2.

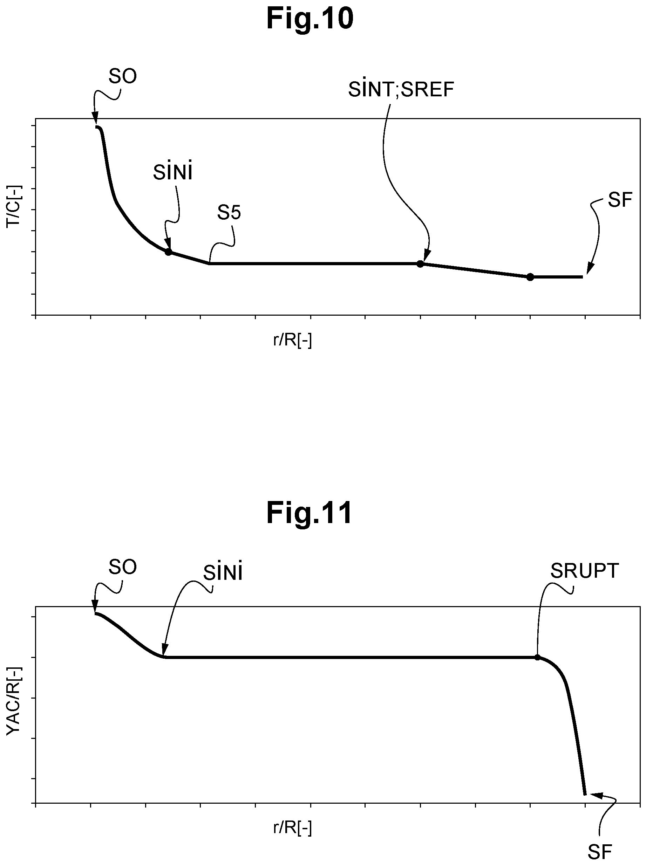

En référence à la figure 10, le saumon 42 de la partie courante 40 a une épaisseur relative T/C qui décroît linéairement en s'éloignant de la section intermédiaire SINT jusqu'à une épaisseur égale à 0.08 au niveau d'une section se trouvant à une distance de l'axe de rotation égale à 90% du rayon rotor R, puis reste constante jusqu'à la section finale SF incluse.

En référence à la figure 11, la section de rupture SRUPT se trouve à une distance de l'axe de rotation AX égale à 91.5% du rayon rotor R. La distance de déport adimensionnée par le rayon rotor R est égale à 0.03384 dans la section finale SF avec un point de quart de corde situé entre l'axe de pas AXPAS et le bord de fuite BF. La distance de déport adimensionnée par le rayon rotor R varie selon une loi en tangente hyperbolique de la section de rupture SRUPT à la section finale SF. Cette loi en tangente hyperbolique peut prendre la forme suivante :

$$\frac{\text{YAC}\left(\frac{r}{R}\right)}{R} = \frac{\text{YAC}_{\text{tip}}}{R} + \frac{\text{YAC}_0 - \text{YAC}_{\text{tip}}}{R \tanh\left[k\left(1 - \frac{r_D}{R}\right)\right]} \tanh\left[k\left(1 - \frac{r}{R}\right)\right]$$

avec « YAC » la distance de déport, « R » le rayon rotor, « r » le rayon séparant la section concernée de l'axe de rotation, « YAC$_{\text{tip}}$ » égal à -0.03384 multiplié par le rayon rotor R, « YAC$_0$ » égal à 0.041 multiplié par le rayon rotor R, « r$_D$/R » égal à 0.85, « k » égal à 31.

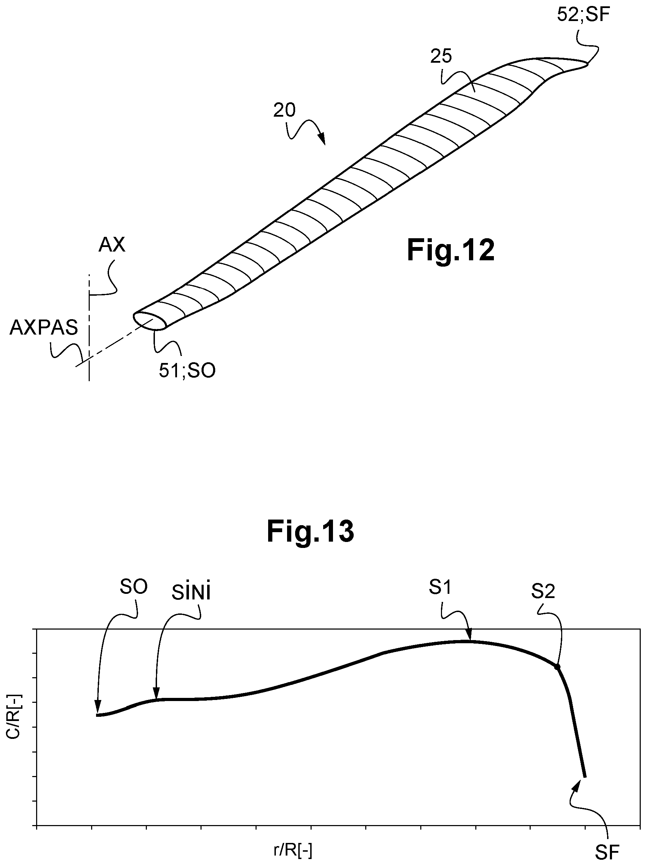

Les figures 12 à 15 illustrent une deuxième variante V2 qui se distingue de la réalisation des figures 2 à 7 par ses lois de variation de la corde, de vrillage et de déport au niveau du saumon 42. La loi de variation de l'épaisseur relative est identique à loi de la réalisation des figures 2 à 7 décrites précédemment.

En référence à la figure 13, comme pour les pales des figures 2 à 11, la corde maximale Cmax adimensionnée par le rayon rotor R est égale à 0.0746, la première distance étant égale à 78.2% du rayon rotor R. Par contre, la deuxième distance est égale à 94.5% du rayon rotor R.

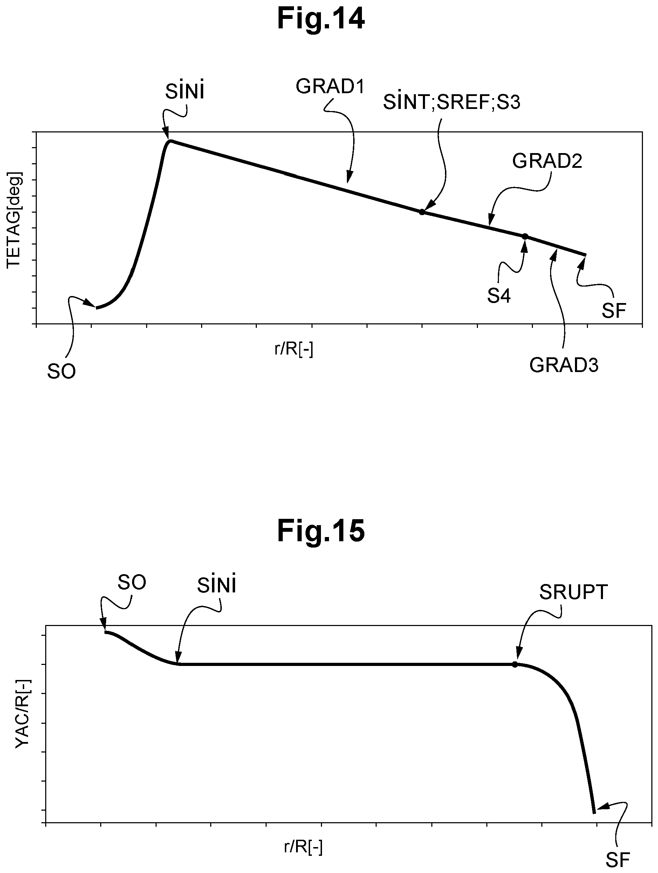

En référence à la figure 14, la deuxième variante V2 se distingue de la réalisation des figures 2 à 7 en ayant un deuxième gradient GRAD2 égal à -10° par rayon rotor R, un troisième gradient GRAD3 égal à -20° par rayon rotor R, la quatrième section S4 se trouvant aussi à une distance de l'axe de rotation AX égale à 88% du rayon rotor R.

En référence à la figure 15, comme pour la pale 20 des figures 2 à 7, la section de rupture SRUPT se trouve à une distance de l'axe de rotation AX égale à 85% du rayon rotor R, la distance de déport adimensionnée par le rayon rotor R étant égale à 0.051 dans la section finale SF avec un point de quart de corde situé entre l'axe de pas AXPAS et le bord de fuite BF. Par contre, la distance de déport adimensionnée par le rayon rotor R varie selon une loi prédéterminée de la section de rupture SRUPT à la section finale SF. Cette loi prédéterminée est :

$$\frac{\mathrm{YAC}\left(\frac{r}{R}\right)}{R} = \frac{\mathrm{YAC}_{\mathrm{tip}}}{R} + \frac{\mathrm{YAC}_0 - \frac{d}{R}\exp\left[\left(\frac{r_D - u}{sig}\right)^2\right] - \mathrm{YAC}_{\mathrm{tip}}}{R\tanh\left[k\left(1 - \frac{r_D}{R}\right)\right]}\tanh\left[k\left(1 - \frac{r}{R}\right)\right]$$
$$+ \frac{d}{R}\exp\left[\left(\frac{r - u}{sig}\right)^2\right]$$

avec « YAC » la distance de déport, « R » le rayon rotor, « r » le rayon séparant la section concernée de l'axe de rotation, « $\mathrm{YAC}_{\mathrm{tip}}$ » égal à -0.051 multiplié par le rayon rotor R, « $\mathrm{YAC}_0$ » égal à 0.041 multiplié par le rayon rotor R, « $r_D/R$ » égal à 0.85, « k » égal à 23.1, « d » égal à -0.29% du rayon rotor R, « u » égal à 92.8% du rayon rotor R et « sig » égal à 3.7% du rayon rotor R.

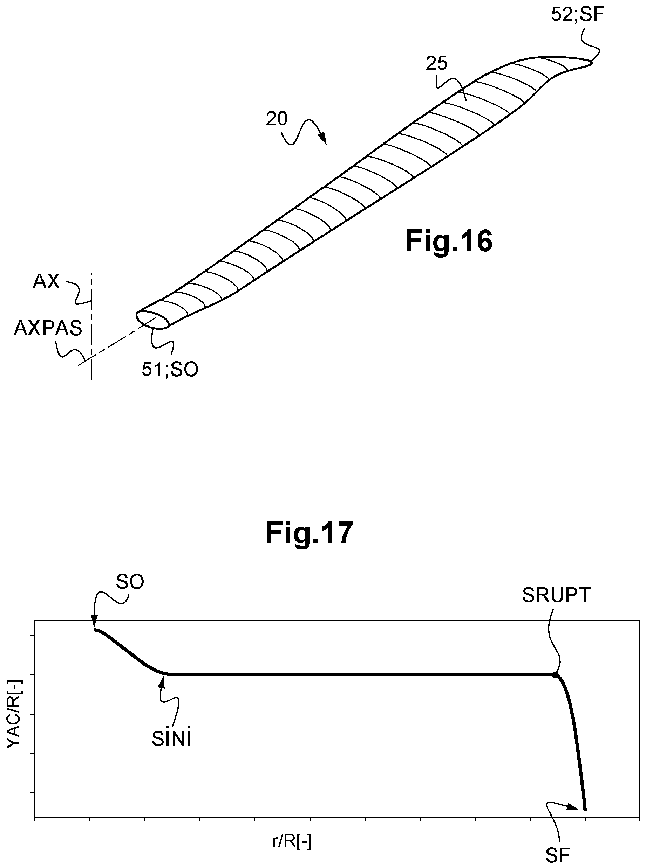

Les figures 16 à 17 illustrent une troisième variante V3 qui se distingue de la réalisation des figures 2 à 7 uniquement par sa loi de déport au niveau du saumon 42.

Ainsi, cette pale 20 comporte une corde maximale Cmax adimensionnée par le rayon rotor R égale à 0.0746, la première distance étant égale à 78.2% du rayon rotor R et la deuxième distance étant égale à 94.5% du rayon rotor R.

La partie courante 40 a une épaisseur relative T/C qui décroît linéairement en s'éloignant de la section intermédiaire SINT jusqu'à une épaisseur relative T/C égale à 0.07 dans la section finale SF.

En outre, le deuxième gradient GRAD2 est égal à -10° par rayon rotor R, le troisième gradient GRAD3 est égal à -20° par rayon rotor R, la quatrième section S4 se trouvant à une distance de l'axe de rotation AX égale à 88% du rayon rotor R.

Par contre et en référence à la figure 17, la section de rupture SRUPT se trouve désormais à une distance de l'axe de rotation AX égale à 94% du rayon rotor R. La distance de déport adimensionnée par le rayon rotor R est égale à 0.03384 dans la section finale SF avec un point de quart de corde situé entre l'axe de pas AXPAS et le bord de fuite BF. Enfin, la distance de déport adimensionnée par le rayon rotor R variant selon la loi prédéterminée suivante de la section de rupture SRUPT à la section finale SF :

$$\frac{\mathrm{YAC}\left(\frac{r}{R}\right)}{R} = \frac{\mathrm{YAC}_{\mathrm{tip}}}{R} + \frac{\mathrm{YAC}_0 - \frac{d}{R}\exp\left[\left(\frac{r_D - u}{sig}\right)^2\right] - \mathrm{YAC}_{\mathrm{tip}}}{R\tanh\left[k\left(1 - \frac{r_D}{R}\right)\right]}\tanh\left[k\left(1 - \frac{r}{R}\right)\right]$$
$$+ \frac{d}{R}\exp\left[\left(\frac{r - u}{sig}\right)^2\right]$$

avec « YAC » la distance de déport, « R » le rayon rotor, « r » le rayon séparant la section concernée de l'axe de rotation, « $\mathrm{YAC}_{\mathrm{tip}}$ » égal à -0.03384 multiplié par le rayon rotor R, « $\mathrm{YAC}_0$ » égal à 0.041 multiplié par le rayon rotor R, « $r_D/R$ » égal à 0.85, « k » égal à 32, « d » égal à 0.15% du rayon rotor R, « u » égal à 95.5 du rayon rotor R et « sig » égal à 1.3% du rayon rotor R.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un autre moyen sans sortir du cadre de la présente invention et des revendications, l'invention étant définie par les revendications.

**Revendications**

1. Pale (20) pour une voilure tournante (10) d'un aéronef (1), la pale (20) étant mobile en rotation autour d'un axe de rotation (AX) de la voilure tournante (10) et autour d'un axe de pas (AXPAS), ladite pale (20) s'étendant selon l'axe de pas (AXPAS) d'une première extrémité (51) à une deuxième extrémité (52), la pale (20) comprenant un corps de pale (25) ayant selon l'axe de pas (AXPAS) un pied de pale (30) puis une partie courante formés par une succession de sections (S) sensiblement perpendiculaires à l'axe de pas (AXPAS), le pied de pale (30) étant muni d'une section d'origine (SO) formant la première extrémité (51), la partie courante (40) s'étendant selon l'axe de pas (AXPAS) d'une section initiale (SINI) jusqu'à une section finale (SF) formant la deuxième extrémité (52), la section finale (SF) étant située à une distance égale à un rayon rotor (R) prédéterminé dudit axe de rotation (AX), chaque section s'étendant selon un axe transversal d'un bord d'attaque (BA) à un bord de fuite (BF) séparés par une distance maximale constituant une corde (C), chaque section du corps de pale (25) présentant un angle de vrillage géométrique par rapport à une section de référence (SREF) située à une distance de l'axe de rotation égale à 70% du rayon rotor (R), **caractérisée en ce que** :

   - la section initiale (SINI) est disposée à une distance de l'axe de rotation (AX) comprise entre 20% et 30% du rayon rotor (R),
   - la corde (C) des sections augmente depuis la section d'origine (SO) jusqu'à une corde maximale (Cmax) atteinte dans une première section (S1) située à une première distance de l'axe de rotation (AX) comprise entre 75% et 80% du rayon rotor (R) puis décroît selon une loi présentant d'une part une décroissance lente jusqu'à une deuxième section (S2) puis d'autre part une décroissance rapide, la deuxième section (S2) se situant à une deuxième distance de l'axe de rotation (AX) comprise entre 80% et 95% du rayon rotor (R), une corde aérodynamique moyenne (Caero) adimensionnée par le rayon rotor (R) étant comprise entre 0.05 et 0.08, la corde maximale (Cmax) adimensionnée par le rayon rotor (R) étant supérieure à la corde aérodynamique moyenne (Caero) adimensionnée par le rayon rotor (R) et comprise entre 0.06 et 0.1,
   - les sections ont une épaisseur relative (T/C) qui décroît de la section d'origine (S0) à la section initiale (SINI) d'une épaisseur relative (T/C) comprise entre 0.25 et 0.70 jusqu'à une épaisseur relative (T/C) comprise entre 0.12 et 0.15, la partie courante (40) présentant à partir de la section initiale (SINI) et jusqu'à une section intermédiaire (SINT) une épaisseur relative (T/C) constante ou une épaisseur relative (T/C) qui décroît puis est constante, la partie courante (40) ayant une épaisseur relative (T/C) qui décroît en s'éloignant de la section intermédiaire (SINT) jusqu'à une épaisseur relative (T/C) comprise entre 0.07 et 0.08 dans la section finale, la section intermédiaire (SINT) se trouvant à une distance de l'axe de rotation (AX) comprise entre 65% et 85% du rayon rotor (R),
   - lesdits angles de vrillage géométrique croissent continument de la section d'origine (SO) jusqu'à la section initiale (SINI) d'un angle minimal (TETAGMIN) négatif jusqu'à un angle maximal (TETAGMAX) positif puis décroissent selon un premier gradient (GRAD1) compris entre -9° par rayon rotor et -13° par rayon rotor (R) jusqu'à une troisième section (S3) se trouvant à une distance de l'axe de rotation (AX) comprise entre 70% et 80% du rayon rotor (R), puis selon un deuxième gradient (GRAD2) supérieur ou égal au premier gradient (GRAD1) jusqu'à une quatrième section (S4) se trouvant à une distance de l'axe de rotation (AX) comprise entre 88% et 90% du rayon rotor (R), puis selon un troisième gradient (GRAD3) inférieur au premier gradient (GRAD1) jusqu'à la section finale (SF),
   - une distance de déport (YAC) séparant l'axe de pas (AXPAS) d'une ligne quart de corde pour chaque section décroît en partant de la section d'origine (SO) jusqu'à la section initiale (SINI), cette distance de déport étant constante dans la partie courante (40) de la section initiale (SINI) à une section de rupture (SRUPT) puis décroît, la section de rupture (SRUPT) se trouvant à une distance de l'axe de rotation (AX) comprise entre 80% et 95% du rayon rotor R.

2. Pale selon la revendication 1,
   **caractérisée en ce que** la partie courante (40) comporte un premier profil de la section initiale (SINI) jusqu'à une section interne (S5) se trouvant à une distance de l'axe de rotation (AX) comprise entre 30 et 35% du rayon rotor R, un deuxième profil de la section interne (S5) à la section intermédiaire (SINT), le deuxième profil de la section intermédiaire (SINT) à une section de transition (S6), un troisième profil de la section de transition (S6) à la section finale (SF), et un quatrième profil dans la section finale (SF).

3. Pale selon l'une quelconque des revendications 1 à 2,
   **caractérisée en ce que** la pale comporte les caractéristiques suivantes :

   - la corde des sections augmente depuis la section d'origine (SO) jusqu'à une corde maximale (Cmax) atteinte selon un taux d'accroissement moyen de 4.47%,
- la section initiale (SINI) a une épaisseur relative (T/C) de 0.45, la partie courante (40) présentant à partir de la section initiale (SINI) une épaisseur relative (T/C) qui décroît linéairement d'une valeur de 0.15 jusqu'à 0.12 au niveau d'une section interne (S5) puis est constante jusqu'à la section intermédiaire (SINT), la section intermédiaire (SINT) se trouvant à une distance de l'axe de rotation (AX) égale à 70% du rayon rotor R,
- les angles de vrillage croissent selon une loi convexe au niveau du pied de pale (30), le premier gradient (GRAD1) est égal à -10° par rayon rotor (R),
- la ligne de quart de corde est située sur l'axe de pas au niveau de la section d'origine (SO), la distance de déport étant égale à +0.041% du rayon rotor (R) dans un tronçon allant de la section initiale (SINI) à la section de rupture (SRUPT), la ligne de quart de corde de ce tronçon se trouvant entre l'axe de pas (AXPAS) et le bord d'attaque (BA) de ce tronçon.

4. Pale selon la revendication 3,
   **caractérisée en ce que** la pale comporte les caractéristiques suivantes :

   - la section initiale (SINI) est disposée à une distance de l'axe de rotation (AX) égale à 24% du rayon rotor (R),
   - la corde aérodynamique moyenne (Caero) adimensionnée par le rayon rotor (R) est égale à 0.0651.

5. Pale selon l'une quelconque des revendications 1 à 4,
   **caractérisée en ce que** :

   - la corde maximale (Cmax) adimensionnée par le rayon rotor (R) est égale à 0.0746, la première distance étant égale à 78.2% du rayon rotor R,
   - la deuxième distance est égale à 87% du rayon rotor (R), la décroissance de la corde des sections de la partie courante (40) passant de -2.85% à -18.16% au niveau de la deuxième section (S2), la corde (C) décroissant à partir de la deuxième section (S2) selon une courbe (C1) présentant un point d'inflexion (PINF) dans une section d'inflexion (SINF) située à une troisième distance de l'axe de rotation (AX) égale à 94.5% du rayon rotor (R), la pente de la courbe au niveau du point d'inflexion étant selon un axe horizontal (AXH),
   - la partie courante (40) a une épaisseur relative (T/C) qui décroît linéairement en s'éloignant de la section intermédiaire (SINT) jusqu'à une épaisseur relative égale à 0.07 dans la section finale (SF),
   - le deuxième gradient (GRAD2) est égal à -7.3° par rayon rotor (R), le troisième gradient (GRAD3) est égal à -20° par rayon rotor (R), la quatrième section (S4) se trouvant à une distance de l'axe de rotation (AX) égale à 88% du rayon rotor (R),
   - la section de rupture (SRUPT) se trouvant à une distance de l'axe de rotation (AX) égale à 85% du rayon rotor (R), la distance de déport adimensionnée par le rayon rotor (R) étant égale à 0.051 dans la section finale (SF) avec un point de quart de corde situé entre l'axe de pas (AXPAS) et le bord de fuite (BF), la distance de déport adimensionnée par le rayon rotor (R) variant selon une loi en tangente hyperbolique de la section de rupture (SRUPT) à la section finale (SF).

6. Pale selon la revendication 5,

   **caractérisée en ce que** ladite loi en tangente hyperbolique est définie par l'équation :

$$\frac{\text{YAC}\left(\frac{r}{R}\right)}{R} = \frac{\text{YAC}_{\text{tip}}}{R} + \frac{\text{YAC}_0 - \text{YAC}_{\text{tip}}}{R \tanh\left[k\left(1 - \frac{r_D}{R}\right)\right]} \tanh\left[k\left(1 - \frac{r}{R}\right)\right]$$

   avec « YAC » la distance de déport, « R » le rayon rotor, « r » le rayon séparant la section concernée de l'axe de rotation, « YAC$_{\text{tip}}$ » égal à -0.051 multiplié par le rayon rotor R, « YAC$_0$ » égal à 0.041 multiplié par le rayon rotor R, « r$_D$/R » égal à 0.85, « k » égal à 23.1.

7. Pale selon l'une quelconque des revendications 1 à 4,
   **caractérisée en ce que** :

   - la corde maximale (Cmax) adimensionnée par le rayon rotor est égale à 0.0746, la première distance étant égale à 78.2% du rayon rotor R,
   - la deuxième distance est égale à 87% du rayon rotor (R), la décroissance passant de -2.85% à -18.16% au niveau de la deuxième section (S2), la corde (C) décroissant à partir de la deuxième section (S2) selon une courbe présentant un point d'inflexion (PINF) dans une section d'inflexion (SINF) située à une troisième distance de l'axe de rotation (AX) égale à 94.5% du rayon rotor (R), la pente de la courbe au niveau du point d'inflexion étant selon un axe oblique (AXO),

- la partie courante (40) ayant une épaisseur relative (T/C) qui décroît linéairement en s'éloignant de la section intermédiaire (SINT) jusqu'à une épaisseur égale à 0.08 d'une section se trouvant à une distance de l'axe de rotation égale à 90% du rayon rotor jusqu'à la section finale (SF) incluse,

- le deuxième gradient (GRAD2) est égal à -7.3° par rayon rotor (R), le troisième gradient (GRAD3) est égal à -20° par rayon rotor (R), la quatrième section (S4) se trouvant à une distance de l'axe de rotation (AX) égale à 88% du rayon rotor (R),

- la section de rupture (SRUPT) se trouvant à une distance de l'axe de rotation (AX) égale à 91.5% du rayon rotor (R), la distance de déport adimensionnée par le rayon rotor (R) étant égale à 0.03384 dans la section finale (SF) avec un point de quart de corde situé entre l'axe de pas (AXPAS) et le bord de fuite (BF), la distance de déport adimensionnée par le rayon rotor (R) variant selon une loi en tangente hyperbolique de la section de rupture (SRUPT) à la section finale (SF).

**8.** Pale selon la revendication 7,

   **caractérisée en ce que** ladite loi en tangente hyperbolique est définie par l'équation :

$$\frac{\text{YAC}\left(\frac{r}{R}\right)}{R} = \frac{\text{YAC}_{\text{tip}}}{R} + \frac{\text{YAC}_0 - \text{YAC}_{\text{tip}}}{R \tanh\left[k\left(1 - \frac{r_D}{R}\right)\right]} \tanh\left[k\left(1 - \frac{r}{R}\right)\right]$$

   avec « YAC » la distance de déport, « R » le rayon rotor, « r » le rayon séparant la section concernée de l'axe de rotation, « YAC$_{\text{tip}}$» égal à -0.03384 multiplié par le rayon rotor R, « YAC$_0$ » égal à 0.041 multiplié par le rayon rotor R, « r$_D$/R » égal à 0.85, « k » égal à 31.

**9.** Pale selon l'une quelconque des revendications 1 à 4,
   **caractérisée en ce que** :

   - la corde maximale (Cmax) adimensionnée par le rayon rotor (R) est égale à 0.0746, la première distance étant égale à 78.2% du rayon rotor (R),
   - la deuxième distance est égale à 94.5% du rayon rotor (R),
   - la partie courante (40) ayant une épaisseur relative (T/C) qui décroît linéairement en s'éloignant de la section intermédiaire (SINT) jusqu'à une épaisseur relative (T/C) égale à 0.07 dans la section finale (SF),
   - le deuxième gradient (GRAD2) est égal à -10° par rayon rotor (R), le troisième gradient (GRAD3) est égal à -20° par rayon rotor (R), la quatrième section (S4) se trouvant à une distance de l'axe de rotation (AX) égale à 88% du rayon rotor (R),
   - la section de rupture (SRUPT) se trouvant à une distance de l'axe de rotation (AX) égale à 85% du rayon rotor (R), la distance de déport adimensionnée par le rayon rotor (R) étant égale à 0.051 dans la section finale (SF) avec un point de quart de corde situé entre l'axe de pas (AXPAS) et le bord de fuite (BF), la distance de déport adimensionnée par le rayon rotor (R) variant selon une loi prédéterminée de la section de rupture (SRUPT) à la section finale (SF).

**10.** Pale selon la revendication 9,

   **caractérisée en ce que** ladite loi prédéterminée est définie par l'équation :

$$\frac{\text{YAC}\left(\frac{r}{R}\right)}{R} = \frac{\text{YAC}_{\text{tip}}}{R} + \frac{\text{YAC}_0 - \frac{d}{R}\exp\left[\left(\frac{r_D - u}{sig}\right)^2\right] - \text{YAC}_{\text{tip}}}{R \tanh\left[k\left(1 - \frac{r_D}{R}\right)\right]} \tanh\left[k\left(1 - \frac{r}{R}\right)\right] + \frac{d}{R}\exp\left[\left(\frac{r - u}{sig}\right)^2\right]$$

   avec « YAC » la distance de déport, « R » le rayon rotor, « r » le rayon séparant la section concernée de l'axe de rotation, « YAC$_{\text{tip}}$» égal à -0.051 multiplié par le rayon rotor R, « YAC$_0$ » égal à 0.041 multiplié par le rayon rotor R, « r$_D$/R » égal à 0.85, « k » égal à 23.1, « d » égal à -0.29% du rayon rotor R, « u » égal à 92.8% du rayon rotor R et « sig » égal à 3.7% du rayon rotor R.

11. Pale selon l'une quelconque des revendications 1 à 4,
**caractérisée en ce que** :

- la corde maximale (Cmax) adimensionnée par le rayon rotor (R) est égale à 0.0746, la première distance étant égale à 78.2% du rayon rotor (R),
- la deuxième distance est égale à 94.5% du rayon rotor (R),
- la partie courante (40) ayant une épaisseur relative (T/C) qui décroît linéairement en s'éloignant de la section intermédiaire (SINT) jusqu'à une épaisseur relative (T/C) égale à 0.07 dans la section finale (SF),
- le deuxième gradient (GRAD2) est égal à -10° par rayon rotor (R), le troisième gradient (GRAD3) est égal à -20° par rayon rotor (R), la quatrième section (S4) se trouvant à une distance de l'axe de rotation (AX) égale à 88% du rayon rotor (R),
- la section de rupture (SRUPT) se trouvant à une distance de l'axe de rotation (AX) égale à 94% du rayon rotor (R), la distance de déport adimensionnée par le rayon rotor (R) étant égale à 0.03384 dans la section finale (SF) avec un point de quart de corde situé entre l'axe de pas (AXPAS) et le bord de fuite (BF), la distance de déport adimensionnée par le rayon rotor (R) variant selon une loi prédéterminée de la section de rupture (SRUPT) à la section finale (SF).

12. Pale selon la revendication 11,

**caractérisée en ce que** ladite loi prédéterminée est définie par l'équation :

$$\frac{\text{YAC}\left(\frac{r}{R}\right)}{R} = \frac{\text{YAC}_{\text{tip}}}{R} + \frac{\text{YAC}_0 - \frac{d}{R}\exp\left[\left(\frac{r_D - u}{sig}\right)^2\right] - \text{YAC}_{\text{tip}}}{R\tanh\left[k\left(1 - \frac{r_D}{R}\right)\right]}\tanh\left[k\left(1 - \frac{r}{R}\right)\right] + \frac{d}{R}\exp\left[\left(\frac{r - u}{sig}\right)^2\right]$$

avec « YAC » la distance de déport, « R » le rayon rotor, « r » le rayon séparant la section concernée de l'axe de rotation, « YAC$_{\text{tip}}$» égal à -0.03384 multiplié par le rayon rotor R, « YAC$_0$ » égal à 0.041 multiplié par le rayon rotor R, « r$_D$/R » égal à 0.85, « k » égal à 32, « d » égal à 0.15% du rayon rotor R, « u » égal à 95.5 du rayon rotor R et « sig » égal à 1.3% du rayon rotor R.

13. Pale selon l'une quelconque des revendications 1 à 12,
**caractérisée en ce que** la partie courante (40) comporte en partant du pied de pale (30) une partie intermédiaire (41) suivie d'un saumon (42), le saumon (42) présentant un dièdre nul par rapport à la partie intermédiaire (41).

14. Voilure tournante (10) munie d'un moyeu (11) mobile en rotation autour d'un axe de rotation (AX), la voilure tournante (10) comprenant au moins une pale (20) attachée au moyeu (11),
**caractérisée en ce que** ladite pale (20) est selon l'une quelconque des revendications 1 à 13.

15. Aéronef (1) muni d'une voilure tournante (10),
**caractérisé en ce que** ladite voilure tournante est selon la revendication 14.

**Patentansprüche**

1. Blatt (20) für einen Drehflügel (10) eines Luftfahrzeugs (1), wobei das Blatt (20) um eine Drehachse (AX) des Drehflügels (10) und um eine Steigungsachse (AXPAS) drehbar ist, wobei das Blatt (20) sich entlang der Steigungsachse (AXPAS) von einem ersten Ende (51) zu einem zweiten Ende (52) erstreckt, wobei das Blatt (20) einen Blattkörper (25) umfasst, der entlang der Steigungsachse (AXPAS) einen Blattfuß (30) und dann einen Hauptteil aufweist, der aus einer Abfolge von Abschnitten (S) gebildet sind, die im Wesentlichen senkrecht zur Steigungsachse (AXPAS) stehen, wobei der Blattfuß (30) mit einem Ausgangsabschnitt (SO) versehen ist, der das erste Ende (51) bildet, wobei sich der Hauptabschnitt (40) entlang der Steigungsachse (AXPAS) von einem Anfangsabschnitt (SINI) bis zu einem Endabschnitt (SF) erstreckt, der das zweite Ende (52) bildet, wobei der Endabschnitt (SF) in einem Abstand von der Drehachse (AX) angeordnet ist, der einem vorgegebenen Rotorradius (R) entspricht, wobei sich jeder Abschnitt entlang einer Querachse von einer Vorderkante (BA) zu einer Hinterkante (BF) erstreckt, die durch einen maximalen Abstand getrennt sind, der eine Sehne (C) darstellt, wobei jeder Abschnitt des Flügelkörpers (25) einen geometrischen Verwindungswinkel in Bezug auf einen Referenzabschnitt (SREF) aufweist, der sich in einem Abstand von der Drehachse befindet, der 70 % des Rotorradius (R) entspricht, **dadurch gekennzeichnet, dass**:

- der Anfangsabschnitt (SINI) in einem Abstand von der Drehachse (AX) angeordnet ist, der zwischen 20 % und 30 % des Rotorradius (R) beträgt,
- die Sehne (C) der Abschnitte vom Ausgangsabschnitt (SO) bis zu einer maximalen Sehne (Cmax) zunimmt, die in einem ersten Abschnitt (S1) erreicht wird, der sich in einem ersten Abstand von der Drehachse (AX) zwischen 75 % und 80 % des Rotorradius (R) befindet, und anschließend nach einer Regel abnimmt, die einerseits eine langsame Abnahme bis zu einem zweiten Abschnitt (S2) und andererseits eine schnelle Abnahme aufweist, wobei sich der zweite Abschnitt (S2) in einem zweiten Abstand von der Drehachse (AX) zwischen 80 % und 95 % des Rotorradius (R) befindet, wobei eine mit dem Rotorradius (R) normierte mittlere aerodynamische Sehne (Caero) zwischen 0,05 und 0,08 misst, die mit dem Rotorradius (R) normierte maximale Sehne (Cmax) größer ist als die mit dem Rotorradius (R) normierte mittlere aerodynamische Sehne (Caero) und zwischen 0,06 und 0,1 misst,
- die Abschnitte eine relative Dicke (T/C) aufweisen, die vom Ursprungsabschnitt (SO) zum Anfangsabschnitt (SINI) von einer relativen Dicke (T/C) zwischen 0,25 und 0,70 auf eine relative Dicke (T/C) zwischen 0,12 und 0,15 abnimmt, wobei der Hauptabschnitt (40) vom Anfangsabschnitt (SINI) bis zu einem Zwischenabschnitt (SINT) eine konstante relative Dicke (T/C) oder eine relative Dicke (T/C), die zunächst abnimmt und dann konstant ist aufweist, wobei der Hauptabschnitt (40) eine relative Dicke (T/C) aufweist, die mit zunehmender Entfernung vom Zwischenabschnitt (SINT) bis auf eine relative Dicke (T/C) zwischen 0,07 und 0,08 im Endabschnitt abnimmt, wobei sich der Zwischenabschnitt (SINT) in einem Abstand von der Drehachse (AX) befindet, der zwischen 65 % und 85 % des Rotorradius (R) beträgt;
- die geometrischen Verwindungswinkel vom Ausgangsabschnitt (SO) bis zum Anfangsabschnitt (SINI) kontinuierlich von einem negativen Minimalwinkel (TETAGMIN) bis zu einem positiven Maximalwinkel (TETAGMAX) zunehmen und dann gemäß einem ersten Gradienten (GRAD1) zwischen -9° auf den Rotorradius und -13° auf den Rotorradius (R) bis zu einem dritten Abschnitt (S3) abnehmen, der sich in einem Abstand von der Drehachse (AX) zwischen 70 % und 80 % des Rotorradius (R) befindet, und anschließend gemäß einem zweiten Gradienten (GRAD2), der größer oder gleich dem ersten Gradienten (GRAD1) ist, bis zu einem vierten Abschnitt (S4) abnehmen, der sich in einem Abstand von der Drehachse (AX) zwischen 88 % und 90 % des Rotorradius (R) befindet, und anschließend bis zum Endabschnitt (SF) gemäß einem dritten Gradienten (GRAD3) abnehmen, der kleiner ist als der erste Gradient (GRAD 1),
- ein Versatzabstand (YAC), der in jedem Abschnitt die Steigungsachse (AXPAS) von einer Viertelsehnenlinie trennt, für jeden Abschnitt vom Ausgangsabschnitt (SO) bis zum Anfangsabschnitt (SINI) abnimmt, wobei dieser Versatzabstand im Hauptabschnitt (40) des Anfangsabschnitts (SINI) bis zu einem Bruchabschnitt (SRUPT) konstant ist und dann abnimmt, wobei sich der Bruchabschnitt (SRUPT) in einem Abstand zur Drehachse (AX) befindet, der zwischen 80 % und 95 % des Rotorradius R beträgt.

2. Blatt nach Anspruch 1,
   **dadurch gekennzeichnet, dass** der Hauptabschnitt (40) vom Anfangsabschnitt (SINI) bis zu einem Innenabschnitt (S5), der sich in einem Abstand von der Drehachse (AX) zwischen 30 und 35 % des Rotorradius R befindet, ein erstes Profil, vom inneren Abschnitt (S5) zum Zwischenabschnitt (SINT) ein zweites Profil, vom Zwischenabschnitt (SINT) zum Übergangsabschnitt (S6) ein drittes Profil, vom Übergangsabschnitt (S6) zum Endabschnitt (SF) ein viertes Profil und im Endabschnitt (SF) ein fünftes Profil aufweist.

3. Blatt nach einem der Ansprüche 1 bis 2,
   **dadurch gekennzeichnet, dass** das Blatt die folgenden Merkmale aufweist:

   - die Sehne der Abschnitte nimmt vom Ausgangsabschnitt (SO) bis zu einer maximalen Sehne (Cmax) mit einer durchschnittlichen Zunahmerate von 4,47 % zu,
   - der Anfangsabschnitt (SINI) weist eine relative Dicke (T/C) von 0,45 auf, wobei der Hauptteil (40) ausgehend vom abschnitt (SINI) eine relative Dicke (T/C) aufweist, die linear von einem Wert von 0,15 auf 0,12 auf Höhe eines Innenabschnitts (S5) abnimmt und dann bis zum Zwischenabschnitt (SINT) konstant bleibt, wobei sich der Zwischenabschnitt (SINT) in einem Abstand von der Drehachse (AX) befindet, der 70 % des Rotorradius R entspricht,
   - die Verwindungswinkel nehmen am Blattfuß (30) nach einer konvexen Regel zu, wobei der erste Gradient (GRAD 1) -10° auf den Rotorradius (R) beträgt,
   - die Viertelsehnenlinie liegt im Bereich des Ursprungsabschnitts (SO) auf der Steigungsachse, wobei der Versatzabstand in einem Abschnitt, der vom Anfangsabschnitt (SINI) bis zum Bruchabschnitt (SRUPT) reicht, +0,041 % des Rotorradius (R) beträgt, und die Viertelsehnenlinie dieses Abschnitts zwischen der Steigungsachse (AXPAS) und der Vorderkante (BA) dieses Abschnitts liegt.

4. Blatt nach Anspruch 3,
**dadurch gekennzeichnet, dass** das Blatt die folgenden Merkmale aufweist:

- der Anfangsabschnitt (SINI) ist in einem Abstand von der Drehachse (AX) angeordnet, der 24 % des Rotorradius (R) entspricht,
- die mit dem Rotorradius (R) normierte mittlere aerodynamische Sehne (Caero) beträgt 0,0651.

5. Blatt nach einem der Ansprüche 1 bis 4, **dadurch gekennzeichnet, dass**:

- die mit dem Rotorradius (R) normierte maximale Sehne (Cmax) 0,0746 beträgt und der erste Abstand 78,2 % des Rotorradius R beträgt,
- der zweite Abstand 87 % des Rotorradius (R) beträgt und die Abnahme der Sehne der Abschnitte des Hauptteils (40) auf Höhe des zweiten Abschnitts (S2) von -2,85% auf -18,16% übergeht,
- die Sehne (C) ab dem zweiten Abschnitt (S2) entlang einer Kurve (C1) abnimmt, die einen Wendepunkt (PINF) in einem Wendebereich (SINF) aufweist, der in einem dritten Abstand von der Drehachse (AX) liegt, der 94,5 % des Rotorradius (R) entspricht, wobei die Steigung der Kurve am Wendepunkt entlang einer horizontalen Achse (AXH) verläuft,
- der Hauptabschnitt (40) eine relative Dicke (T/C) aufweist, die vom Zwischenabschnitt (SINT) weg linear abnimmt, bis sie im Endabschnitt (SF) eine relative Dicke von 0,07 erreicht,
- der zweite Gradient (GRAD2) -7,3° auf den Rotorradius (R) beträgt, der dritte Gradient (GRAD3) -20° auf den Rotorradius (R) beträgt, und der vierte Abschnitt (S4) sich in einem Abstand von der Drehachse (AX) befindet, der 88 % des Rotorradius (R) entspricht,
- der Bruchabschnitt (SRUPT) sich in einem Abstand von der Drehachse (AX) befindet, der 85 % des Rotorradius (R) entspricht, wobei der durch den Rotorradius (R) normierte Versatzabstand im Endabschnitt (SF) 0,051 beträgt, ein Viertelsehnenpunkt zwischen der Steigungsachse (AXPAS) und der Hinterkante (BF) liegt, und der durch den Rotorradius (R) normierte Versatzabstand vom Bruchabschnitt (SRUPT) zum Endabschnitt (SF) gemäß einer tanh-Regel variiert.

6. Blatt nach Anspruch 5,
**dadurch gekennzeichnet, dass** die tanh-Regel durch die folgende Gleichung definiert ist:

$$\frac{\text{YAC}\left(\frac{r}{R}\right)}{R} = \frac{\text{YAC}_{\text{tip}}}{R} + \frac{\text{YAC}_0 - \text{YAC}_{\text{tip}}}{R \tanh\left[k\left(1 - \frac{r_D}{R}\right)\right]} \tanh\left[k\left(1 - \frac{r}{R}\right)\right]$$

wobei "YAC" der Versatzabstand, "R" der Rotorradius, "r" der Radius, der den betreffenden Abschnitt von der Drehachse trennt, "YAC$_{\text{tip}}$" gleich -0,051 multipliziert mit dem Rotorradius R, "YAC$_0$" gleich 0,041 multipliziert mit dem Rotorradius R, "r$_D$/R" gleich 0,85 und "k" gleich 23,1 ist.

7. Flügel nach einem der Ansprüche 1 bis 4,
**dadurch gekennzeichnet, dass**:

- die mit dem Rotorradius normierte maximale Sehne (Cmax) gleich 0,0746 ist und der erste Abstand 78,2 % des Rotorradius R beträgt,
- der zweite Abstand 87 % des Rotorradius (R) beträgt, die Abnahme im zweiten Abschnitt (S2) von -2.85% auf -18.16% übergeht, die Sehne (C) ab dem zweiten Abschnitt (S2) entlang einer Kurve abnimmt, die einen Wendepunkt (PINF) in einem Wendebereich (SINF) aufweist, der sich in einem dritten Abstand von der Drehachse (AX) befindet, der 94,5 % des Rotorradius (R) entspricht, wobei die Steigung der Kurve am Wendepunkt entlang einer schrägen Achse (AXO) verläuft,
- der Hauptabschnitt (40) eine relative Dicke (T/C) aufweist, die mit zunehmender Entfernung vom Zwischenabschnitt (SINT) linear bis auf eine Dicke von 0,08 in einem Abschnitt abnimmt, der sich in einem Abstand von der Drehachse befindet, der 90 % des Rotorradius entspricht, bis einschließlich des Endabschnitts (SF),
- der zweite Gradient (GRAD2) -7,3° auf den Rotorradius (R) beträgt, der dritte Gradient (GRAD3) -20° auf den Rotorradius (R) beträgt, und der vierte Abschnitt (S4) sich in einem Abstand von der Drehachse (AX) befindet, der 88 % des Rotorradius (R) entspricht,

- der Bruchabschnitt (SRUPT) sich in einem Abstand von der Drehachse (AX) befindet, der 91,5 % des Rotorradius (R) entspricht, wobei der mit dem Rotorradius (R) normierte Versatzabstand im Endabschnitt (SF) 0,03384 beträgt, ein Viertelsehnenpunkt zwischen der Steigungsachse (AXPAS) und der Hinterkante (BF) liegt, und der mit dem Rotorradius (R) normierte Versatzabstand vom Bruchabschnitt (SRUPT) zum Endabschnitt (SF) gemäß einer tanh-Regel variiert.

8. Blatt nach Anspruch 7,
   **dadurch gekennzeichnet, dass** die tanh-Regel durch die folgende Gleichung definiert ist:

$$\frac{\text{YAC}\left(\frac{r}{R}\right)}{R} = \frac{\text{YAC}_{\text{tip}}}{R} + \frac{\text{YAC}_0 - \text{YAC}_{\text{tip}}}{R \tanh\left[k\left(1 - \frac{r_D}{R}\right)\right]} \tanh\left[k\left(1 - \frac{r}{R}\right)\right]$$

   wobei "YAC" der Versatzabstand, "R" der Rotorradius, "r" der Radius, der den betreffenden Abschnitt von der Drehachse trennt, "$\text{YAC}_{\text{tip}}$" gleich -0,03384 multipliziert mit dem Rotorradius R, "$\text{YAC}_0$" gleich 0,041 multipliziert mit dem Rotorradius R, "$r_D/R$" gleich 0,85 und "k" gleich 31 ist.

9. Blatt nach einem der Ansprüche 1 bis 4, **dadurch gekennzeichnet, dass**:

   - die mit dem Rotorradius (R) normierte maximale Sehne (Cmax) gleich 0,0746 ist, und der erste Abstand 78,2 % des Rotorradius (R) beträgt,
   - der zweite Abstand 94,5 % des Rotorradius (R) beträgt,
   - der Hauptabschnitt (40) eine relative Dicke (T/C) aufweist, die mit zunehmender Entfernung vom Zwischenabschnitt (SINT) linear bis zu einer relativen Dicke (T/C) von 0,07 im Endabschnitt (SF) abnimmt,
   - der zweite Gradient (GRAD2) -10° auf den Rotorradius (R) beträgt, der dritte Gradient (GRAD3) -20° auf den Rotorradius (R) beträgt, und der vierte Abschnitt (S4) sich in einem Abstand von der Drehachse (AX) befindet, der 88 % des Rotorradius (R) entspricht,
   - der Bruchabschnitt (SRUPT) sich in einem Abstand von der Drehachse (AX) befindet, der 85 % des Rotorradius (R) entspricht, der mit dem Rotorradius (R) normierte Versatzabstand im Endabschnitt (SF) 0,051 beträgt, ein Viertelsehnenpunkt zwischen der Steigungsachse (AXPAS) und der Hinterkante (BF) liegt, und der durch den Rotorradius (R) normierte Versatzabstand vom Bruchabschnitt (SRUPT) zum Endabschnitt (SF) gemäß einer vorgegebenen Regel variiert.

10. Blatt nach Anspruch 9, **dadurch gekennzeichnet, dass** die vorgegebene Regel durch die folgende Gleichung definiert ist:

$$\frac{\text{YAC}\left(\frac{r}{R}\right)}{R} = \frac{\text{YAC}_{\text{tip}}}{R} + \frac{\text{YAC}_0 - \frac{d}{R}\exp\left[\left(\frac{r_D - u}{sig}\right)^2\right] - \text{YAC}_{\text{tip}}}{R \tanh\left[k\left(1 - \frac{r_D}{R}\right)\right]} \tanh\left[k\left(1 - \frac{r}{R}\right)\right] + \frac{d}{R}\exp\left[\left(\frac{r - u}{sig}\right)^2\right]$$

,

   wobei "YAC" der Versatzabstand, "R" der Rotorradius, "r" der Radius, der den betreffenden Abschnitt von der Drehachse trennt, "$\text{YAC}_{\text{tip}}$" gleich -0,051 multipliziert mit dem Rotorradius R, "$\text{YAC}_0$" gleich 0,041 multipliziert mit dem Rotorradius R, "$r_D/R$" gleich 0,85, "k" gleich 23,1, "d" gleich -0,29 % des Rotorradius R, "u" gleich 92,8 % des Rotorradius R und "sig" gleich 3,7 % des Rotorradius R ist.

11. Blatt nach einem der Ansprüche 1 bis 4,
    **dadurch gekennzeichnet, dass**:

    - die durch den Rotorradius (R) normierte maximale Sehne (Cmax) gleich 0,0746 ist, und der erste Abstand gleich 78,2 % des Rotorradius (R) ist,
    - der zweite Abstand gleich 94,5 % des Rotorradius (R) ist,
    - der Hauptabschnitt (40) eine relative Dicke (T/C) aufweist, die sich vom Zwischenabschnitt (SINT) weg bis zu einer relativen Dicke (T/C) von 0,07 im Endabschnitt (SF) linear verringert,

- der zweite Gradient (GRAD2) -10° auf den Rotorradius (R) beträgt, der dritte Gradient (GRAD3) -20° auf den Rotorradius (R) beträgt, und der vierte Abschnitt (S4) sich in einem Abstand von der Drehachse (AX) befindet, der 88 % des Rotorradius (R) entspricht,

- der Bruchabschnitt (SRUPT) sich in einem Abstand von der Rotationsachse (AX) befindet, der 94 % des Rotorradius (R) entspricht, der durch den Rotorradius (R) normierte Versatzabstand im Endabschnitt (SF) 0,03384 beträgt, ein Viertelsehnenpunkt zwischen der Steigungsachse (AXPAS) und der Hinterkante (BF) liegt und der durch den Rotorradius (R) normierte Versatzabstand sich vom Bruchabschnitt (SRUPT) zum Endabschnitt (SF) gemäß einer vorgegebenen Regel ändert.

12. Blatt nach Anspruch 11,
**dadurch gekennzeichnet, dass** die vorgegebene Regel definiert ist durch die Gleichung:

$$\frac{\mathrm{YAC}\left(\frac{r}{R}\right)}{R} = \frac{\mathrm{YAC_{tip}}}{R} + \frac{\mathrm{YAC_0} - \frac{d}{R}\exp\left[\left(\frac{r_D - u}{sig}\right)^2\right] - \mathrm{YAC_{tip}}}{R\tanh\left[k\left(1 - \frac{r_D}{R}\right)\right]} \tanh\left[k\left(1 - \frac{r}{R}\right)\right] + \frac{d}{R}\exp\left[\left(\frac{r - u}{sig}\right)^2\right] ,$$

wobei "YAC" der Versatzabstand, "R" der Rotorradius, "r" der Radius, der den betreffenden Abschnitt von der Drehachse trennt, "YAC_{tip}" gleich -0,03384 multipliziert mit dem Rotorradius R, "YAC_0" gleich 0,041 multipliziert mit dem Rotorradius R, "r_D/R" gleich 0,85, "k" gleich 32, "d" gleich 0,15 % des Rotorradius R, "u" gleich 95,5 % des Rotorradius R und "sig" gleich 1,3 % des Rotorradius R ist.

13. Blatt nach einem der Ansprüche 1 bis 12,
**dadurch gekennzeichnet, dass** der Hauptteil (40) ausgehend vom Blattfuß (30) einen Zwischenabschnitt (41) aufweist, auf den sich eine Blattspitze (42) anschließt, wobei die Blattspitze (42) gegenüber dem Zwischenabschnitt (41) einen V-Winkel von Null aufweist.

14. Drehflügel (10), der mit einer Nabe (11) versehen ist, die um eine Drehachse (AX) drehbar ist, wobei der Drehflügel (10) mindestens ein an der Nabe (11) befestigtes Blatt (20) umfasst,
**dadurch gekennzeichnet, dass** das Blatt (20) einem der Ansprüche 1 bis 13 entspricht.

15. Luftfahrzeug (1) mit einem Drehflügel (10), **dadurch gekennzeichnet, dass** der Drehflügel Anspruch 14 entspricht.

## Claims

1. Vane (20) for a rotary wing (10) of an aircraft (1), the vane (20) being rotatably moveable about an axis of rotation (AX) of the rotary wing (10) and about a pitch axis (AXPAS), said vane (20) extending along the pitch axis (AXPAS) from a first end (51) to a second end (52), the vane (20) comprising a vane body (25) having, about the pitch axis (AXPAS), a vane root (30) then a current part formed by a succession of sections (S), substantially perpendicular to the pitch axis (AXPAS), the vane root (30) being provided with an original section (SO) forming the first end (51), the current part (40) extending along the pitch axis (AXPAS) of an initial section (SINI) up to a final section (SF) forming the second end (52), the final section (SF) being located at a distance equal to a predetermined rotor radius (R) of said axis of rotation (AX), each section extending along a transverse axis from a leading edge (BA) to a trailing edge (BF) separated by a maximum distance constituting a chord (C), each section of the vane body (25) having a geometric twist angle with respect to a reference section (SREF) located at a distance from the axis of rotation equal to 70% of the rotor radius (R),
**characterised in that**:

- the initial section (SINI) is disposed at a distance from the axis of rotation (AX) of between 20% and 30% of the rotor radius (R),
- the chord (C) of the sections increases from the original section (SO) up to a maximum chord (Cmax) reached in a first section (S1) located at a first distance from the axis of rotation (AX) of between 75% and 80% of the rotor radius (R) then decreases according to a law having, on the one hand, a slow decrease up to a second section (S2), then, on the other hand, a rapid decrease, the second section (S2) being located at a second distance from the axis of rotation (AX) of between 80% and 95% of the rotor radius (R), an average aerodynamic chord (Caero) non-dimensionalised by the rotor radius (R) being between 0.05 and 0.08, the maximum chord (Cmax) non-dimensionalised by the rotor radius (R) being greater than an average aerodynamic chord (Caero) non-dimensionalised by the rotor radius (R) and of between 0.06 and 0.1,
- the sections have a relative thickness (T/C) which decreases from the original section (SO) to the initial section (SINI) of a relative thickness (T/C) of between 0.25 and 0.70 up to a relative thickness (T/C) of between 0.12 and 0.15, the current part (40) having, from the initial section (SINI) and up to an intermediate section (SINT), a constant relative thickness (T/C) or a relative thickness (T/C) which decreases, then is constant, the current part (40) having a relative thickness (T/C) which decreases by moving away from the intermediate section (SINT) up to a relative thickness (T/C) of between 0.07 and 0.08 in the final section, the intermediate section (SINT) being located at a distance from the axis of rotation (AX) of between 65% and 85% of the rotor radius (R);
- said geometric twist angles continually increase from the original section (SO) up to the initial section (SINI) of a negative minimum angle (TETAGMIN) up to a positive maximum angle (TETAGMAX), then decrease along a first gradient (GRAD1) of between -9° by rotor radius and
- 13° by rotor radius (R) up to a third section (S3) being located at a distance from the axis of rotation (AX) of between 70% and 80% of the rotor radius (R), then along a second gradient (GRAD2) greater than or equal to the first gradient (GRAD1) up to a fourth section (S4) being located at a distance from the axis of rotation (AX) of between 88% and 90% of the rotor radius (R), then along a third gradient (GRAD3) less than the first gradient (GRAD1) up to the final section (SF),
- an offset distance (YAC) separating the pitch axis (AXPAS) from a quarter-chord line for each section decreases by starting from the original section (SO) up to the initial section (SINI), this offset distance being constant in the current part (40) from the initial section (SINI) to a breaking section (SRUPT) then decreases, the breaking section (SRUPT) being located at a distance from the axis of rotation (AX) of between 80% and 95% of the rotor radius R.

2. Vane according to claim 1, **characterised in that** the current part (40) has a first profile of the initial section (SINI) up to an internal section (S5) being located at a distance from the axis of rotation (AX) of between 30 and 35% of the rotor radius R, a second profile of the internal section (S5) at the intermediate section (SINT), the second profile of the intermediate section (SINT) at a transition section (S6), a third profile of the transition section (S6) at the final section (SF), and a fourth profile in the final section (SF).

3. Vane according to any one of claims 1 to 2, **characterised in that** the vane has the following features:

- the chord of the sections increases from the original section (SO) up to a maximum chord (Cmax) reached according to an average increase rate of 4.47%,
- the initial section (SINI) has a relative thickness (T/C) of 0.45, the current part (40) having from the initial section (SINI), a relative thickness (T/C) which decreases linearly from a value of 0.15 up to 0.12 at an internal section (S5), then is constant, up to the intermediate section (SINT), the intermediate section (SINT) being located at a distance from the axis of rotation (AX) equal to 70% of the rotor radius R,
- the twist angles increase according to a convex law at the vane root (30), the first gradient (GRAD1) is equal to -10° by rotor radius (R),
- the quarter-chord line is located on the pitch axis at the original section (SO), the offset distance being equal to +0.041% of the rotor radius (R) in a section going from the initial section (SINI) to the breaking section (SRUPT), the quarter-chord line of this section being located between the pitch axis (AXPAS) and the leading edge (BA) of this section.

4. Vane according to claim 3,
**characterised in that** the vane has the following features:

- the initial section (SINI) is disposed at a distance from the axis of rotation (AX) equal to 24% of the rotor radius (R),
- the average aerodynamic chord (Caero) non-dimensionalised by the rotor radius (R) is equal to 0.0651.

5. Vane according to any one of claims 1 to 4,
**characterised in that**:

- the maximum chord (Cmax) non-dimensionalised by the rotor radius (R) is equal to 0.0746, the first distance being equal to 78.2% of the rotor radius R,
- the second distance is equal to 87% of the rotor radius (R), the decrease of the chord of the sections of the current part (40) passing from -2.85% to -18.16% at the second section (S2),
the chord (C) decreasing from the second section (S2) along a curve (C1) having an inflection point (PINF) in an inflection section (SINF) located at a third distance from the axis of rotation (AX) equal to 94.5% of the rotor radius (R), the gradient of the curve at the inflection point being about a horizontal axis (AXH),
- the current part (40) has a relative thickness (T/C) which decreases linearly by moving away from the intermediate section (SINT) up to a relative thickness equal to 0.07 in the final section (SF),
- the second gradient (GRAD2) is equal to -7.3° by rotor radius (R), the third gradient (GRAD3) is equal to -20° by rotor radius (R), the fourth section (S4) being located at a distance from the axis of rotation (AX) equal to 88% of the rotor radius (R),
- the breaking section (SRUPT) being located at a distance from the axis of rotation (AX) equal to 85% of the rotor radius (R), the offset distance non-dimensionalised by the rotor radius (R) being equal to 0.051 in the final section (SF) with a quarter-chord point located between the pitch axis (AXPAS) and the trailing edge (BF), the offset distance non-dimensionalised by the rotor radius (R) varying according to a hyperbolic tangent law of the breaking section (SRUPT) at the final section (SF).

6.  Vane according to claim 5, **characterised in that** said hyperbolic tangent law is defined by the equation:

$$\frac{\text{YAC}\left(\frac{r}{R}\right)}{R} = \frac{\text{YAC}_{tip}}{R} + \frac{\text{YAC}_0 - \text{YAC}_{tip}}{R \tanh\left[k\left(1 - \frac{r_D}{R}\right)\right]} \tanh\left[k\left(1 - \frac{r}{R}\right)\right]$$ with "YAC" the offset distance, "R" the rotor radius, "r" the radius separating the section in question of the axis of rotation, "YAC" equal to -0.051 multiplied by the rotor radius R, "$\text{YAC}_0$" equal to 0.041 multiplied by the rotor radius R, "rD/R" equal to 0.85, "k" equal to 23.1.

7.  Vane according to any one of claims 1 to 4, **characterised in that**:

- the maximum chord (Cmax) non-dimensionalised by the rotor radius is equal to 0.0746, the first distance being equal to 78.2% of the rotor radius R,
- the second distance is equal to 87% of the rotor radius (R), the decrease passing from -2.85% to -18.16% at the second section (S2), the chord (C) decreasing from the second section (S2) along a curve having an inflection point (PINF) in an inflection section (SINF) located at a third distance from the axis of rotation (AX) equal to 94.5% of the rotor radius (R), the gradient of the curve at the inflection point being about an oblique axis (AXO),
- the current part (40) having a relative thickness (T/C) which decreases linearly by moving away from the intermediate section (SINT) up to a thickness equal to 0.08 of a section being located at a distance from the axis of rotation equal to 90% of the rotor radius up to the final section (SF) inclusive,
- the second gradient (GRAD2) is equal to -7.3° by rotor radius (R), the third gradient (GRAD3) is equal to -20° by rotor radius (R), the fourth section (S4) being located at a distance from the axis of rotation (AX) equal to 88% of the rotor radius (R),
- the breaking section (SRUPT) being located at a distance from the axis of rotation (AX) equal to 91.5% of the rotor radius (R), the offset distance non-dimensionalised by the rotor radius (R) being equal to 0.03384 in the final section (SF) with a quarter-chord point located between the pitch axis (AXPAS) and the trailing edge (BF), the offset distance non-dimensionalised by the rotor radius (R) varying according to a hyperbolic tangent law of the breaking section (SRUPT) at the final section (SF).

8.  Vane according to claim 7, **characterised in that** said hyperbolic tangent law is defined by the equation:

$$\frac{\text{YAC}\left(\frac{r}{R}\right)}{R} = \frac{\text{YAC}_{tip}}{R} + \frac{\text{YAC}_0 - \text{YAC}_{tip}}{R \tanh\left[k\left(1 - \frac{r_D}{R}\right)\right]} \tanh\left[k\left(1 - \frac{r}{R}\right)\right]$$

with "YAC" the offset distance, "R" the rotor radius, "r" the radius separating the section in question of the axis of rotation, "$\text{YAC}_{tip}$" equal to -0.03384 multiplied by the rotor radius R, "$\text{YAC}_0$" equal to 0.041 multiplied by the rotor radius R, "rD/R" equal to 0.85, "k" equal to 31.

9.  Vane according to any one of claims 1 to 4,
    **characterised in that**:

- the maximum chord (Cmax) non-dimensionalised by the rotor radius (R) is equal to 0.0746, the first distance being equal to 78.2% of the rotor radius (R),
- the second distance is equal to 94.5% of the rotor radius (R),
- the current part (40) having a relative thickness (T/C) which decreases linearly by moving away from the intermediate section (SINT) up to a relative thickness (T/C) equal to 0.07 in the final section (SF),
- the second gradient (GRAD2) is equal to -10° by rotor radius (R), the third gradient (GRAD3) is equal to -20° by rotor radius (R), the fourth section (S4) being located at a distance from the axis of rotation (AX) equal to 88% of the rotor radius (R),
- the breaking section (SRUPT) being located at a distance from the axis of rotation (AX) equal to 85% of the rotor radius (R), the offset distance non-dimensionalised by the rotor radius (R) being equal to 0.051 in the final section (SF) with a quarter-chord point located between the pitch axis (AXPAS) and the trailing edge (BF), the offset distance non-dimensionalised by the rotor radius (R) varying according to a predetermined law of the breaking section (SRUPT) at the final section (SF).

**10.** Vane according to claim 9,

**characterised in that** said predetermined law is defined by the equation:

$$\frac{\mathrm{YAC}\left(\frac{r}{R}\right)}{R} = \frac{\mathrm{YAC_{tip}}}{R} + \frac{\mathrm{YAC_0} - \frac{d}{R}\exp\left[\left(\frac{r_D - u}{sig}\right)^2\right] - \mathrm{YAC_{tip}}}{R\tanh\left[k\left(1 - \frac{r_D}{R}\right)\right]}\tanh\left[k\left(1 - \frac{r}{R}\right)\right] + \frac{d}{R}\exp\left[\left(\frac{r - u}{sig}\right)^2\right]$$

with "YAC" the offset distance, "R" the rotor radius, "r" the radius separating the section in question of the axis of rotation, "$\mathrm{YAC_{tip}}$" equal to -0.051 multiplied by the rotor radius R, "$\mathrm{YAC_0}$" equal to 0.041 multiplied by the rotor radius R, "rD/R" equal to 0.85, "k" equal to 23.1, "d" equal to -0.29% of the rotor radius R, "u" equal to 92.8% of the rotor radius R, and "sig" equal to 3.7% of the rotor radius R.

**11.** Vane according to any one of claims 1 to 4,
**characterised in that**:

- the maximum chord (Cmax) non-dimensionalised by the rotor radius (R) is equal to 0.0746, the first distance being equal to 78.2% of the rotor radius (R),
- the second distance is equal to 94.5% of the rotor radius (R),
- the current part (40) having a relative thickness (T/C) which decreases linearly by moving away from the intermediate section (SINT) up to a relative thickness (T/C) equal to 0.07 in the final section (SF),
- the second gradient (GRAD2) is equal to -10° by rotor radius (R), the third gradient (GRAD3) is equal to -20° by rotor radius (R), the fourth section (S4) being located at a distance from the axis of rotation (AX) equal to 88% of the rotor radius (R),
- the breaking section (SRUPT) being located at a distance from the axis of rotation (AX) equal to 94% of the rotor radius (R), the offset distance non-dimensionalised by the rotor radius (R) being equal to 0.03384 in the final section (SF) with a quarter-chord point located between the pitch axis (AXPAS) and the trailing edge (BF), the offset distance non-dimensionalised by the rotor radius (R) varying according to a predetermined law of the breaking section (SRUPT) at the final section (SF).

**12.** Vane according to claim 11, **characterised in that** said predetermined law is defined by the equation:

$$\frac{\mathrm{YAC}\left(\frac{r}{R}\right)}{R} = \frac{\mathrm{YAC_{tip}}}{R} + \frac{\mathrm{YAC_0} - \frac{d}{R}\exp\left[\left(\frac{r_D - u}{sig}\right)^2\right] - \mathrm{YAC_{tip}}}{R\tanh\left[k\left(1 - \frac{r_D}{R}\right)\right]}\tanh\left[k\left(1 - \frac{r}{R}\right)\right] + \frac{d}{R}\exp\left[\left(\frac{r - u}{sig}\right)^2\right]$$

with "YAC" the offset distance, "R" the rotor radius, "r" the radius separating the section in question of the axis of rotation, "YAC" equal to -0.03384 multiplied by the rotor radius R, "$\mathrm{YAC_0}$" equal to 0.041 multiplied by the rotor radius R, "rD/R" equal to 0.85, "k" equal to 32, "d" equal to -0.15% of the rotor radius R, "u" equal to 95.5% of the rotor radius R, and "sig" equal to 1.3% of the rotor radius R.

**13.** Vane according to any one of claims 1 to 12, **characterised in that** the current part (40) has, by starting from the vane root (30), an intermediate part (41) followed by a skeg (42), the skeg (42) having a zero dihedron with respect to the intermediate part (41).

14. Rotary wing (10) provided with a hub (11), rotatably moveable about an axis of rotation (AX), the rotary wing (10) comprising at least one vane (20) attached to the hub (11), **characterised in that** said vane (20) is according to any one of claims 1 to 13.

15. Aircraft (1) provided with a rotary wing (10), **characterised in that** said rotary wing is according to claim 14.

# Fig.1

**Fig.2**

**Fig.3**

# Fig.4

# Fig.5

# Fig.6

# Fig.7

**Fig.8**

**Fig.9**

## Fig.10

## Fig.11

EP 4 650 272 B1

**Fig.12**

**Fig.13**

31

# Fig.14

# Fig.15

52;SF

25

20

Fig.16

AX

AXPAS

51;SO

Fig.17

SO

SRUPT

YAC/R[-]

SINI

r/R[-]

SF

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3045564
- EP 0565413 A1
- EP 0842846 A1
- EP 0901961 A1
- EP 3501979 A1